# EUROPÄISCHE PATENTSCHRIFT

(11) **EP 0 514 983 B1**
(45) Veröffentlichungstag und Bekanntmachung des Hinweises auf die Patenterteilung: **04.09.1996**
(21) Anmeldenummer: 92201404.8
(22) Anmeldetag: 18.05.1992
(51) Int. Cl.: G11B 25/06, G11B 15/675

(54) **Anordnung, bestehend aus einem Magnetbandkassettengerät mit einem Laufwerk und mit einem Lademechanismus für Magnetbandkassetten und aus Magnetbandkassetten**
Device comprising a magnetic tape cassette recorder with a drive, a loading gear for cassettes and a cassette
Dispositif comprenant un appareil à cassette à bande magnétique, un entraînement, un mécanisme de chargement de cassette et une cassette

(30) Priorität: 24.05.1991 DE 4116920
(43) Veröffentlichungstag der Anmeldung: 25.11.1992
(73) Patentinhaber: Philips Patentverwaltung GmbH, 22335 Hamburg (DE); Philips Electronics N.V., 5621 BA Eindhoven (NL)
(72) Erfinder: Scholz, Thomas, W-6296 Mengerskirchen-Winkels (DE); Koch, Stefan, W-3551 Bad Endbach (DE)
(74) Vertreter: von Laue, Hanns-Ulrich, Dipl.-Ing.

(56) Entgegenhaltungen:
- EP-A- 0 114 246
- EP-A- 0 406 943
- DE-C- 3 719 890
- DE-C- 3 904 483

## Beschreibung

Die Erfindung bezieht sich auf eine Anordnung, bestehend aus einem Magnetbandkassettengerät mit einem Laufwerk und mit einem Lademechanismus mit Einschubraum für Magnetbandkassetten, in den die Kassetten einschiebbar sind, und aus Magnetbandkassetten, die in planparallelen Hauptwänden Vertiefungen und in einer die Hauptwände verbindenden Seitenwand Bedienungsöffnungen zum Einführen eines Tonkopfes und von Andruckrollen aufweisen, wobei zum Handhaben von Magnetbandkassettentypen mit unterschiedlichen Bandspielnormen und Gehäusegestaltungen ein Erkennungsmechanismus vorgesehen ist, der die Kassettenseitenwand mit den Bedienungsöffnungen abtastet und ein Tastglied aufweist, das je nach Kassettentyp beim Einschieben einer Kassette entweder an dieser Kassettenwand entlangläuft oder aber in eine Führungskontur einfährt, um damit vor einen Schieber dieses Kassettentypes zu gelangen und diesen so weit zu verschieben, daß die Bedienungsöffnungen freigelegt sind.

Eine derartige Anordnung aus funktionell miteinander zusammenwirkendem Magnetbandkassettengerät und Magnetbandkassette ist aus dem deutschen Patent P 37 19 890.4 bekannt. Der Lademechanismus dieser Anordnung ist in dem deutschen Patent P 39 04 483.1 beschrieben. Bei ihm ist ein Kassettenschacht in vertikaler Richtung aus einer Auswerfebene in eine Spielebene absenkbar. Der Kassettenschacht ist ausgelegt zum Aufzeichnen von analog bespielten Magnetbandkassetten, die mit zwei Bandwickeln versehen sind, in die durch beide Kassettenhauptwände hindurch innerhalb des Gerätes Wickeldorne des Laufwerkes eingreifen. Das Magnetband wird in Längsrichtung an einem gegen das Band gedrückten Magnetkopf vorbei geführt, der, ebenso wie Andruckrollen, durch Bedienungsöffnungen an der Öffnungsseitenwand der Kassette in diese einschiebbar ist. Bei der analogen Kassette sind die Bedienungsöffnungen ständig offen. Es ist ein Mitnehmer vorgesehen, der beim von Hand Einschieben einer Kassette in das in Einschieberichtung vorn liegende Wickelloch einfallen kann. Dieser Mitnehmer zieht nach dem Aufstarten eines Einzugsmotors die Magnetbandkassette bis in die Spielposition weiter ein.

Es ist eine digital abspielbare Audio-Magnetbandkassette bekannt, bei der ein rotierender Magnetkopf das Magnetband abtastet. Die Abmessungen dieser digital abspielbaren Audio-Kassette sind derart anders als die der analog abspielbaren Audio-Kassetten, daß für diese Kassetten ein völlig anderes Laufwerk eingesetzt werden muß.

Es wurde auch eine digital abspielbare Audio-Magnetbandkassette vorgestellt, die das Magnetband in Längsrichtung abtastet. Diese digitale, längsabgetastete Magnetbandkassette hat eine der analogen Magnetbandkassette ähnliche Gestalt. Bei dieser digitalen Kassette ist gedacht, sie in Magnetbandkassettengeräten einzusetzen, die sowohl analoge als auch digitale Kassetten in einem für beide Kassettentypen eingerichteten Laufwerk abzuspielen. Die digitale Kassette unterscheidet sich von der analogen Kassette dadurch, daß sie nur in einer Richtung abspielbar ist. Die digitale Kassette hat deshalb nur in einer Hauptwand Wickellöcher zum Einführen von Wickeldornen. Außerdem hat sie einen Schieber, der in seiner Schließstellung an der Öffnungsseitenwand die Öffnungen zum Einschieben von Magnetkopf und Andruckrollen verschließt. Dieser Schieber muß vor der Inbetriebnahme der Kassette beiseite geschoben werden.

Aus EP-A-0406943 ist auch bekannt, eine solche digitale Magnetbandkassette in Querrichtung mit ihrer die Bedienungsöffnungen aufweisenden langen Seitenwand in einen Einschubraum einzusetzen. Ein mit einem Taststift versehener Erkennungsmechanismus erkennt dabei den Kassettentyp und schiebt bei der digitalen Kassette den Schieber so beiseite, daß die Bedienungsöffnungen freigelegt werden.

Es ist Aufgabe der Erfindung, eine Anordnung der eingangs erwähnten Art mit einem Magnetbandkassettengerät, das in Längsrichtung abgetastete Magnetbandkassetten einer Analog-Bandspielnorm abspielen kann, derart abzuändern, daß es mit ihm möglich wird, auch in Längsrichtung abgetastete und in Längsrichtung in einen Einschubraum eingeschobene Magnetbandkassetten mit der digitalen Bandspielnorm abzuspielen.

Die gestellte Aufgabe ist erfindungsgemäß dadurch gelöst, daß der Erkennungsmechanismus beim beginnenden Einschieben einer Magnetbandkassette in einer Längsrichtung, in der die Bandwickel hintereinander liegen, aktiviert wird, indem die beim Einschieben vorn liegende kurze Seitenwand den Taststift mitnimmt, ohne daß der Schieber zu diesem Zeitpunkt schon in Richtung auf die Stellung, in der er die Bedienungsöffnungen freigibt, belastet wird, und daß der Taststift bei weiterem Einschieben zur langen Kassettenseitenwand mit den Bedienungsöffnungen wandert und diese entlangfährt, wobei der Taststift den gerade eingeschobenen Kassettentyp erkennt und entsprechend dessen Bauweise entweder bei dem einen Typ bis zum Ende des Einschubweges unbehindert entlangfährt oder bei dem anderen Typ in die Führungskontur einfährt, um den Schieber gegen Ende des Einschubweges zu öffnen.

Da der Erkennungsmechanismus beim Längseinschieben nur die die Hauptwände verbindenden Seitenwände abtastet, wird die Bauhöhe des Lademechanismus durch die Einführung des Erkennungsmechnismus nicht erhöht.

Nach einer weiteren Ausgestaltung der Erfindung ist vorgesehen, daß
- der Erkennungsmechanismus aus einer Mehrgelenkhebelvorrichtung besteht, die unter Federwirkung mit Kassettenseitenwänden beiderseits einer Kassettenecke zusammenwirkt, die in Einschubrichtung das vordere Ende der Öffnungsseitenwand der Kassette begrenzt,
- ein Tastglied an einem Tasthebel der Mehrgelenkhebelvorrichtung beim Einschieben einer Kassette von der in Einschubrichtung vorn liegenden Kassettenseitenwand gegen die Federwirkung mitgenommen wird,
- ein Öffnungshebel der Mehrgelenkhebelvorrichtung gleichzeitig die Öffnungsseitenwand nach einer Führungskontur der Magnetbandkassette mit dem Schieber absucht.

Hiermit kann der Erkennungsmechanismus feststellen, welcher Kassettentyp in den Kassettenschacht eingeschoben wird.

Nach einer weiteren Ausgestaltung der Erfindung ist vorgesehen, daß der Öffnungshebel eine Kontur aufweist, die mit einem Anschlag des Kassettenschachtes derart zusammenwirkt, daß der Öffnungshebel beim Auffinden einer Führungskontur von dem Tastglied an dem Anschlag vorbei in Einschubrichtung mitgenommen werden kann, während er beim Fehlen einer Führungskontur an dem Anschlag hängen bleibt. Der Öffnungshebel gibt damit den weiteren Bewegungsablauf des Erkennungsmechanismus vor.

Nach einer weiteren Ausgestaltung der Erfindung ist vorgesehen, daß beim Mitnehmen des Öffnungshebels in Einschubrichtung der Öffnungsbeginn des Schiebers verschoben wird auf eine derartige gegenseitige Lage von Kassette und Einschuböffnung in der Frontblende des Gerätes, daß sich der Schieber beim Öffnungsbeginn bereits hinter der Vorderkante der Frontblende befindet (korrekt eingelegte digitale Kassette).

Damit wird zum einen ein psychologischer Nachteil vermieden. Würde sich beim Einschieben einer Magnetbandkassette mit Schieber dieser Bereits rückwärts bewegen, während er noch zu sehen ist, dann wäre dies optisch von Nachteil und von den Fingern der einführenden Hand zu spüren. Wird der Schieber erst verschoben, wenn die Magnetbandkassette nahezu im Kassettenschacht verschwunden ist und der Schieber damit nicht mehr zu sehen ist, dann stören die gegenläufigen Bewegungen von Kassettengehäuse und Schieber weder das Auge noch die Finger. Der zweite, vermiedene Nachteil besteht darin, daß der Schieber in seiner Schließstellung gleichzeitig die Wickelspulen in der Kassette arretiert. Solange die Wickelspulen arretiert sind, kann sich das Magnetband nicht frei bewegen, beispielsweise lockern. Wird der Schieber erst sehr spät geöffnet, dann besteht die Gefahr eines Lockerns des Magnetbandes erst im letzten Augenblick der Plazierung der Magnetbandkassette in der Spielstellung.

Nach einer weiteren Ausgestaltung der Erfindung ist vorgesehen, daß der Öffnungshebel beim Hängenbleiben an dem Anschlag beim Einschieben der Kassette gezwungen wird, an der Öffnungsseitenwand entlang zu laufen, wobei das Tastglied gezwungen wird, bereits bei geringer Federwirkung die Kassettenecke zu umfahren (analoge oder fehlerhaft eingelegte digitale Kassette). Damit wird nur ein geringes Spannen der Öffnungsfeder bewirkt. Dies hat zur Folge, daß die Andruckkraft auf die Kassettenseitenwand gering ist.

Nach einer weiteren Ausgestaltung der Erfindung ist vorgesehen, daß der Tasthebel mittels eines Gelenkes gelenkig an dem Öffnungshebel angreift, der wiederum mittels eines Gelenkes gelenkig an einem Lagerhebel angreift, der seinerseits gelenkig am Kassettenschacht angeordnet ist, wobei der Tasthebel mittels einer Öffnungsfeder derart mit dem Kassettenschacht verbunden ist, daß die sich beim Einschieben der Magnetbandkassette spannende Öffnungsfeder auf den Tasthebel und über diesen auf den Öffnungshebel ein im Uhrzeigersinn gerichtetes Moment ausübt, das das Tastglied in Richtung auf die Kassettenecke und den Öffnungshebel mit einem freien Hebelende in Richtung auf die Öffnungsseitenwand der Kassette belastet. Dies hat den Vorteil, daß alle Toleranzen so ausgeglichen werden und somit gewährleistet ist, daS der Öffnungsstift zwischen der Arretierungskante der Führungskontur und dem Schieber eingeklemmt ist.

Nach einer weiteren Ausgestaltung der Erfindung ist vorgesehen, daß am Öffnungshebel ein Öffnungsstift vorgesehen ist, der beim Vorliegen einer Führungskontur in diese einläuft, wodurch die Kontur des Öffnungshebels den Anschlag freigeben kann. Damit wird erreicht, daß das Öffnen des Schiebers mittels des Öffnungsstiftes über das Kräfteverhältnis am Tasthebel gesteuert wird.

Nach einer weiteren Ausgestaltung der Erfindung ist vorgesehen, daß bei freigegebenem Öffnungshebel, mitgenommen von der Kassette über das Tastglied und den Tasthebel sowie das Gelenk und das Gelenk, der Lagerhebel im Uhrzeigersinn um seine Achse schwenkt, wobei der Öffnungsstift konform mit der Kassette in Einschubrichtung mitgenommen wird, so daß er den Schieber gegenüber der Kassette nicht verschieben kann. Dadurch wird für das spätere Öffnen des Schiebers im Erkennungsmechanismus Energie gespeichert.

Nach einer weiteren Austgestaltung der Erfindung ist vorgesehen, daß durch die Achse und das Tastglied mit der Achse zwischen dem Tasthebel und dem Öffnungshebel eine Verbindungslinie geht und daS auf einer Senkrechten auf dieser Verbindungslinie, die in der Achse errichtet ist, der Angriffspunkt der Öffnungsfeder vorgesehen ist, die sich im Kassettenschacht abstützt. Durch die Wahl dieses Kraftangriffspunktes wird ein im Uhrzeigersinn gerichtetes Moment um die Achse des Tastgliedes erreicht.

Nach einer weiteren Ausgestaltung der Erfindung ist vorgesehen, daß beim Einschieben der Kassette der Tasthebel die Öffnungsfeder spannt, die ihrerseits über den Stift auf die Kassette eine entgegen der Einschubkraft gerichtete Kraft und außerdem eine von der Kassettenecke weg wirkende Kraft ausübt, so daß das Tastglied zunächst daran gehindert wird, um die Kassettenecke herumzufahren. Damit wird allein durch das Kräftespiel das Mitfahren des Erkennungsmechanismus in Einschubrichtung bewirkt.

Nach einer weiteren Ausgestaltung der Erfindung ist vorgesehen, daß beim weiteren Einschieben der Kassette und damit bei einem Nachlassen der von der Kassettenecke weg gerichteten Kraft das Tastglied auf die Kassettenecke zufährt und die Kassettenecke umfährt, sobald sich die Kraftwirkung von einer Ausrichtung von der Kassettenecke weg umkehrt in eine Ausrichtung auf die Kassettenecke zu, womit der Öffnungsstift beginnt, den Schieber entgegen der Einschubrichtung zu verschieben und damit die Bedienungsöffnungen zu öffnen. Auf diese Weise läßt sich genau die Weglänge bestimmen, von der ab der Schieber geöffnet wird. Dies kann sehr kurz vor dem Ende des Einschubweges liegen.

Nach einer weiteren Ausgestaltung der Erfindung ist vorgesehen, daß die Öffnungsfeder eine Schlingfeder ist mit einem ersten Federarm, der am Stift des Tasthebels angreift, und einem zweiten Federarm, der an seinem von der Federschlinge abliegenden Ende eine weitere Schlinge aufweist, von der ein dritter Federarm absteht, dessen freies Ende an einem Anschlag anliegt. Dabei ist in weiterer Ausgestaltung der Erfindung vorgesehen, daß sich der Mittelpunkt der Federschlinge stets in einem Bereich befindet, der definierbar ist durch eine Verlängerung der Öffnungsseitenwand in Einschubrichtung und eine Parallele zu dieser Linie, die die Achse schneidet, wobei sich die Federarme in Richtung der Verlängerung der Öffnungsseitenwand erstrecken.

Damit werden die Richtungen der Kräfte entgegen der Einschubrichtung und von der Kassettenecke weg definieret vorgegeben. Außerdem wird bewirkt, daß der Erkennungsmechanismus immer wieder in seine Ausgangsstellung zurückkehrt.

Nach einer weiteren Ausgetaltung der Erfindung ist vorgesehen, daß der Öffnungsstift, nachdem das Tastglied beim Abtasten einer digitalen Magnetbandkassette die Ecke umlaufen hat, beim weiteren Einschieben der Kassette in der Führungskontur entlang läuft, bis er hinter eine Arretierungskante fällt, wobei der Öffnungsstift den Schieber von der Schließstellung in die Öffnungsstellung überführt hat. Durch die vorher in der Feder gespeicherte Energie wird so der Schieber entgegen der Einschubrichtung geöffnet.

Nach einer weiteren Ausgestaltung der Erfindung ist vorgesehen, daß der Öffnungsstift hinter der Arretierungskante gesichert wird mittels eines am Kassettenschacht angeordneten Kassettenhalters, der in eine Mitnehmernut der digitalen Magnetbandkassette einfällt. Die in Schließrichtung wirkende Kraft des Schiebers wird kompensiert, weil der Öffnungsstift zwischen der Arretierungskante und der Schieberkante positioniert ist.

Nach einer weiteren Ausgestaltung der Erfindung ist vorgesehen, daß
- der Kassettenschacht, nachdem eine Magnetbandkassette in ihn bis zu einer Endposition eingeschoben worden ist, mit der Kassette zusammen noch eine Weglänge weiterschiebbar ist bis in eine Anschlagposition,
- der Kassettenschacht mittels einer Arretierung gegen ein Verschieben festgelegt ist bis zu dem Zeitpunkt, in dem die Kassette in ihm ihre Endposition erreicht hat,
- die Arretierung des Kassettenschachtes erst aufgehoben wird, wenn de Kassettenhalter die Kassette bereits ergriffen hat.

Dies hat den Vorteil, daß sich der Kassettenschacht erst bewegen kann, nachdem der Schieber vollständig geöffnet ist und der Kassettenhalter Formschluß mit der Kassette hat.

Nach einer weiteren Ausgestaltung der Erfindung ist vorgesehen, daß der Kassettenhalter die Kassette mittels eines Nockenteiles bei Aufhebung der Arretierung des Kassettenschachtes leicht ergriffen hat und daß der Nocken der digitalen Kassette in die Mitnehmernut bzw. der Nocken der analogen Kassette in ein Wickelloch vollständig formschlüssig eingelaufen sind, wenn die Kassette ihre Anschlagposition in dem Kassettenschacht erreicht hat. Damit ist die Position der Kassette in ihre Lage gegenüber dem Schacht genau festgelegt.

Nach einer weiteren Ausgestaltung der Erfindung ist vorgesehen, daß die Arretierung des Kassettenschachtes mittels eines Arretierhebels vorgenommen wird, der mit einem Arretierhaken hinter einem Anschlag des Chassis verhakbar, von der Kassette aus der Verhakung lösbar und sein freies Ende im Uhrzeigersinn federbelastet ist. Damit ist mit Sicherheit vermieden, daß sich der Kassettenschacht schon bewegen kann, ohne daß sich eine Kassette im Schacht befindet oder bevor die richtig eingelegte Kassette ihre Endposition erreicht hat.

Die Anordnung ist insbesondere für Autoradios geeignet.

Die Erfindung wird anhand der Zeichnung näher erläutert. Es zeigen:
Fig. 1a eine Audio-Magnetbandkassette, die analog bespielt und analog abspielbar ist,
Fig. 1b eine Audio-Magnetbandkassette, die digital bespielt und digital abspielbar ist, mit einem Schieber, der in der Ruhestellung an der Vorderseite die Kassettenöffnungen verschließt,
Fig. 1c das Vorderteil der Magnetbandkassette nach Fig. 1b mit dem beiseite geschobenen Schieber, wobei sich der Schieber in der Öffnungsstellung befindet,
Fig. 2 ein Laufwerk eines Magnetbandkassettengerätes mit einem Lademechanismus für Magnetbandkassetten nach den Fig. 1a bis 1c,
Fig. 3 den Erkennungsmechanismus beim Starten des Laufwerkes durch das Einschieben einer Magnetbandkassette,
Fig. 4 den Erkennungsmechanismus nach dem Einschieben einer analog arbeitenden Magnetbandkassette,
Fig. 5 bis 8 den Erkennungsmechanismus beim Einschieben einer digital arbeitenden Magnetbandkassette in verschiedenen Einschiebepositionen nach dem Beginn des Einschiebens bis zum Ende des Einschiebvorganges,
Fig. 9a in Draufsicht den Lademechanismus für Magnetbandkassetten nach den Fig. 1a bis 1c mit einem Kassettenhalter, kurz bevor die Magnetbandkassette ihre Endposition im Kassettenschacht erreicht,
Fig. 9b den Aufbau nach Fig. 9a in isometrischer Darstellung und Fig. 9c in Seitenansicht,
Fig. 10a eine Draufsicht auf den Lademechanismus nach den Fig. 9a bis 9c, wobei die Magnetebandkassette ihre Endposition erreicht hat,
Fig. 10b den Aufbau nach Fig. 10a in isometrischer Darstellung,
Fig. 10c eine Seitenansicht des Lademechanismus nach Fig. 10a,
Fig. 11 eine Variante des Lademechanismus für mechanischen Einzug.

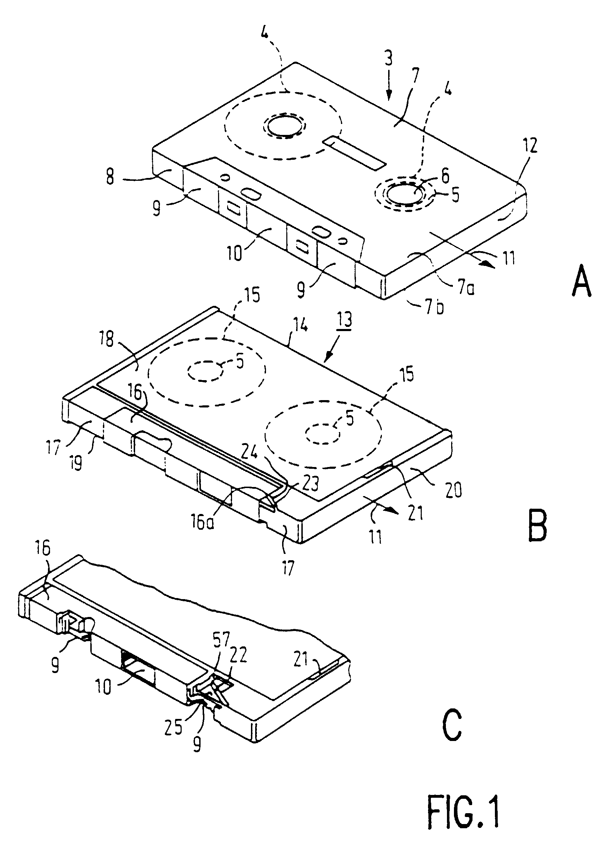

Fig. 1a zeigt eine analog bespielbare und abspielbare Magnetbandkassette 3, in der auf strichpunktiert angedeuten Wickeln 4 ein Magnetband geführt ist. Die Magnetbandwickel 4 sind auf Wickelkerne 5 aufgewickelt, in die durch Wickellöcher 6 des Kassettengenäuses 7 nicht dargestellte Wickeldorne eines Abspielgerätes hindurchgreifen können. An der vorderen Schmalwand, d. h. der Öffnungswand 8 des mit parallelen oberen (7a) und unteren (7b) Hauptwänden versehenen Gehäuses 7 sind Öffnungen 9 vorgesehen, durch die Andruckrollen des Gerätes gegen das in der Kassette 3 geführte Magnetband von außen einschiebbar sind. Eine weitere Öffnung 10 in der Mitte dient dem Einschieben eines Magnetkopf es. Wird die Magnetbandkasette in einem Gerät mit Lademechanismus verwendet, dan wird sie in Richtung eines Pfeiles 11 mit einer vorn liegenden schmalen Seitenwand in einen Kassettenschacht 32 eingeschoben.

Die analog bespielbare und abspielbare Kassette 3 nach Fig. 1a weist Wickellöcher 6 in beiden Hauptwänden 7a, 7b auf. An beiden Hauptwänden sind Erhöhungen 51 mit Kanten 51a vorgesehen.

In Fig. 1b ist eine digital bespielbare und abspielbare Magnetbandkassette 13 schaubildlich dargestellt, die ein Gehäuse 14 aufweist, in dem sich wieder Magnetbandwickel 15 befinden. Für eine Beschreibung der digitalen Kassette wird bezug genommen auf die EP-A 406 943. Die Magnetbandwickel 15 sind auf gestrichelt angedeutete Wickelkerne 5 aufgewickelt. In der Spielposition sitzen die Wickelkerne 5 auf nicht dargestellten Wickeldornen des Gerätes auf. Diese digital abspielbare Kassette 13 hat Wickellöcher nur in der unteren Hauptwand 19 der parallelen Hauptwände 18, 19.

Die Magnetbandkassette nach Fig. 1b ist mit einem Schieber 16 mit einer Schieberkante 16a versehen, der an der Öffnungsseitenwand 17 der Kassette Einführöffnungen 9 und 10 für Andruckrollen und Magnetkopf verschieben kann. In der Darstellung nach Fig. 1b befindet sich der Schieber 16 in seiner Schließstellung, in der er die Öffnungen 9 und 10 verschließt. Der Schieber 16 hat eine U-förmige Gestalt und läuft außer vor der Öffnungswand 17 auch über eine obere Hauptwand 18 und eine untere Hauptwand 19 der Magnetbandkassette 13.

Wie bei der Darstellung nach Fig. 1a wird die Magnetbandkassette 3 zum Abspielen in einem Gerät mit Lademechanismus in Richtung eines Pfeiles 11 mit ihrer vorn liegenden Seitenwand 20 in den Schacht des Gerätes eingeschoben. Nahe der vorn liegenden Seitenwand 20 ist von der oberen Hauptwand 18 her eine Mitnehmernut 21 in das Kassettengehäuse eingebracht. Im Bereich der Öffnungsseitenwand 17 und der oberen Hauptwand 18 ist eine Führungskontur 22 vorgesehen. Diese Führungskontur 22 ist in der Schließstellung des Schiebers 16 nach Fig. 1b teilweise verschlossen, und es bleibt nur ein Einlaufteil 23 mit einem Teil einer Führungskante 24 frei. Die Führungskante 24 erhebt sich aus einer Führungsfläche 25, auf die ein Öffnungsstift 26 auflaufen kann, der später beschrieben wird. Fig. 1c zeigt die digital be- und abspielbare Kassette nach Fig. 1b bei geöffnetem, d. h. beiseite geschobenem Schieber 16 und freigelegten Öffnungen 9 und 10.

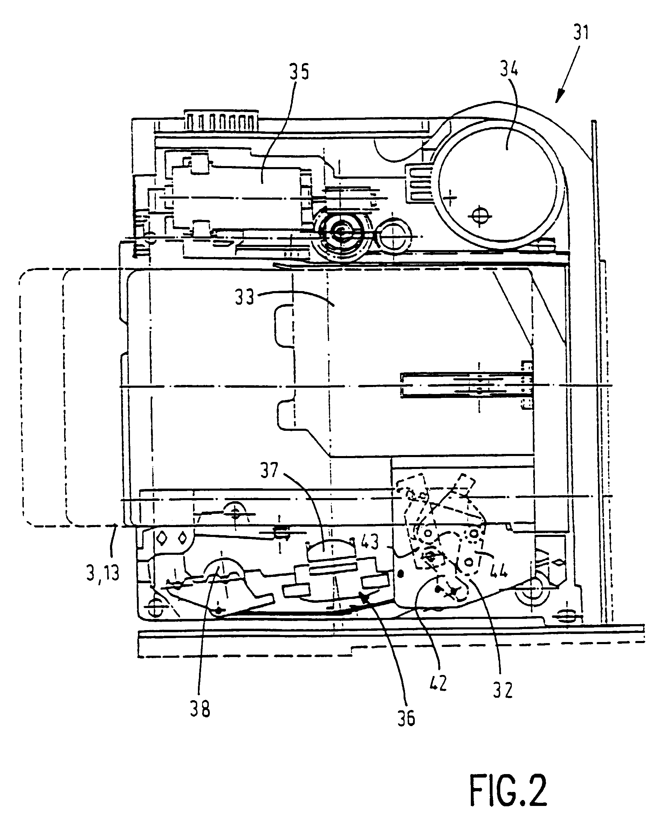

Zum Abspielen dieses Magnetbandkassettengerätes ist dieses mit einem Lademechanismus 32 versehen, der sowohl zum Abspielen von Magnetbandkassetten des Typs nach Fig. 1a als auch nach Fig. 1b und 1c geeignet ist. In Fig. 2 ist dieser Lademechanismus in Draufsicht dargestellt mit einer in einem Kassettenschacht eingeschobenen Magnetbandkassete 13, die digital bespielt ist. Fig. 2 zeigt weiterhin einen Motor 34 zum Antreiben der Tonwellen und einen Motor 35 zum Antrieb der Bandwickel innerhalb der Magnetbandkassette. Auf einen Kopfträger 36 sind ein Tonkopf 37 und Andruckrollen 38 montiert.

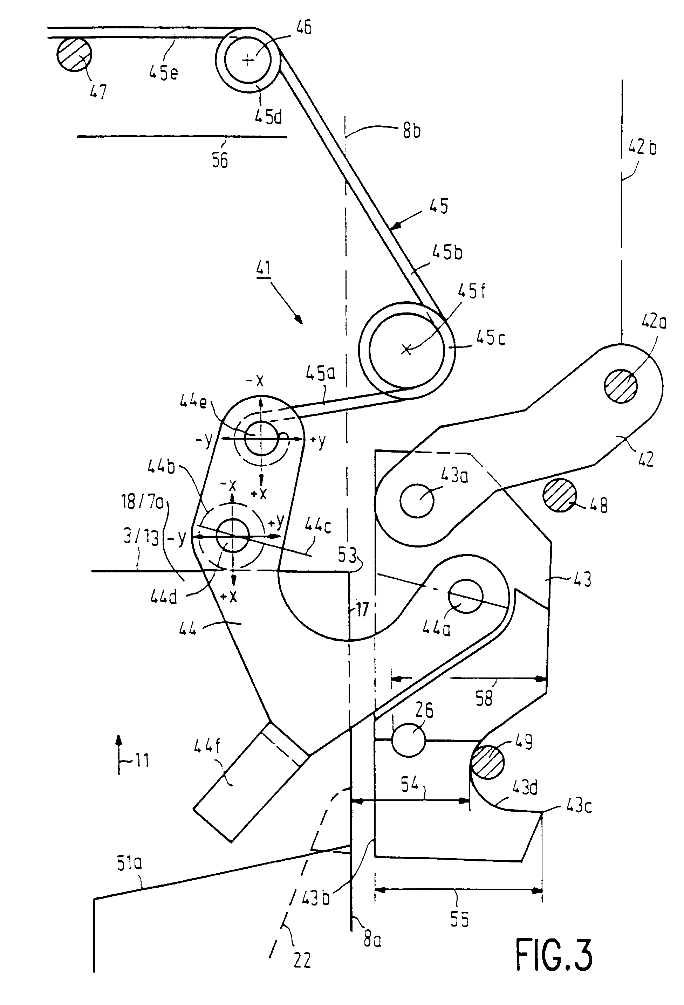

Fig. 3 zeigt einen Erkennungsmechanismus 41, der während der Ladebewegung, d.h. beim Einschieben einer Kassette erkennt, ob es sich um eine analoge Kassette 3 oder eine digitale Kassette 13 handelt. Der Erkennungsmechanismus besteht aus einem Lagerhebel 42, der mit einer Achse 42a im Schacht 33 gelagert ist. Mittels einer Achse 43a ist am Lagerhebel 42 ein Öffnungshebel 43 gelagert. Am Öffnungshebel 43 greift wiederum mittels einer Achse 44a ein Tasthebel 44 an. Dieser Tasthebel 44 trägt ein im folgenden als Tastrolle bezeichnetes rollbares Tastglied 44b. Durch die Achsen 44a des Tasthebels 44 und 44d der Tastrolle 44b verläuft eine Verbindungslinie 44c. Auf einer Senkrechten zu der Verbindungslinie 44c, die in der Achse 44d errichtet ist, ist ein Stift 44e vorgesehen, an dem ein Arm 45a einer Öffnungsfeder 45 angreift. Diese im folgenden auch als Schlingfeder bezeichnete Öffnungsfeder 45 weist einen zweiten Arm 45b auf, der am von der Schlinge 45c abliegenden Ende mit einer weiteren Schlinge 45d versehen ist, die einen Stift 46 umgreift. Von dieser Schlinge 45d steht ein weiterer dritter Arm 45e der Feder 45 ab, der immer an einem Anschlag 47 anliegt.

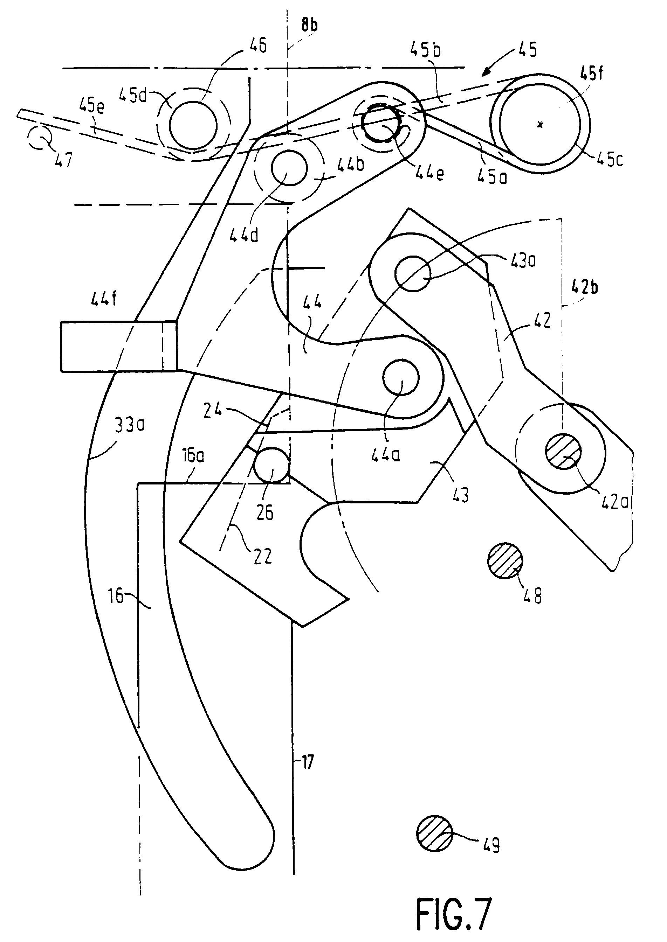

Wie besonders deutlich aus Fig. 7 zu ersehen ist, spannt beim Einschieben der Kassete 13 der Tasthebel über die mitgenommene Tastrolle 44b die Feder 45. Der Mittelpunkt 45f der Federschlinge 45c befindet sich stets in einem Bereich, der definierbar ist durch eine Verlängerung 8b der Öffnungsseitenwand 17 in Einbschubrichtung und eine Parallele 42b zu dieser Linie, die die Achse 42a schneidet, wobei sich die Federarme 45a, 45b in Richtung auf die Verlängerung 8b der Öffnungsseitenwand 17 erstrecken (Fig. 3 und 7).

Der Öffnungshebel 43 trägt den Öffnungsstift 26, der mit der Führungskontur 22 der digitalen Kassette zusammenwirkt. Ebenso wie der Anschlag 47 sind zwei weitere Anschläge 48 und 49 vorgesehen. Der Anschlag 48 fixiert den Lagerhebel 42 bei seinen Bewegungen entgegen dem Uhrzeigersinn. Der Anschlag 49 fixiert den Öffnungshebel 43 in der Startposition. Der Anschlag 49 hat noch eine weitere Funktion, die später beschrieben wird.

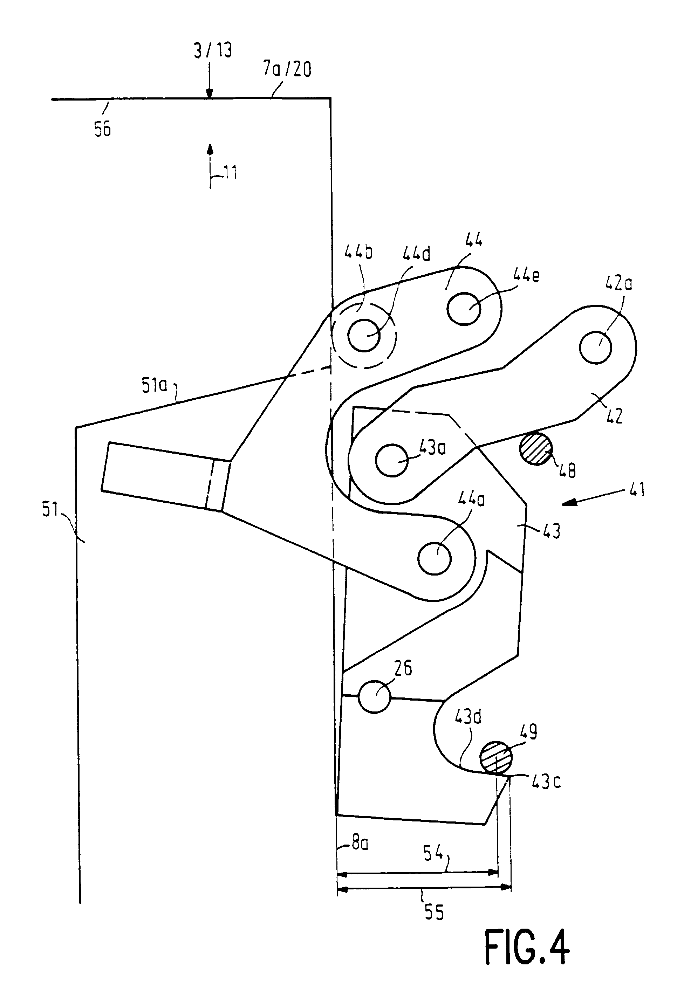

Fig. 3 zeigt den Erkennungsmechanismus 41 beim Starten des Laufwerkes 31 durch das Einschieben einer Magnetbandkassette. Diese Magnetbandkassette kann, wie aus Fig. 4 zu ersehen ist, entweder eine analoge Compactkassette 3 sein oder eine digitale Kassette 13. Der Unterschied der beiden Kassetten ist erkennbar bei der Analog-Kassette an einer Erhöhung 51 mit einer Kante 51a auf der Kassettenhauptwand 7a. Eine Erhöhung 51 und Kante 51a hat die digitale Kassette nicht. Beide Kassettentypen haben aber eine durchgehende Kante 8a. Diese durchgehende Kante 8a wird als Laufkante benutzt, an der der Öffnungshebel 43 vorbeistreichen kann. Die digitale Kassette weist die Führungskontur 22 auf, in die der Öffnungsstift 26 einfallen kann.

Wird eine Kassette 3 oder 13 in den Kassettenschacht 33 eingeschoben, dann kommt sie mit der Tastrolle 44b in Berührung. Infolge der Einschiebbewegung in Richtung des Pfeiles 11 wird die Feder 45 gespannt. Nun kommt folgende Kräft- und Bewegungskonstellation zustande. Der Tasthebel 44 erfährt von der Kassette 3, 13 über die Tastrolle 44b eine Kraft in Richtung - x. Gleichzeitig erfährt der Tasthebel 44 von der Öffnungsfeder 45 über den Stift 44e eine Kraft in Richtung + x, die ihn im Uhrzeigersinn um die Achse 44d belastet. Der Lagerhebel 42 ist infolge der Krafteinwirkung am Tasthebel 44 über die Achse 43a entgegen dem Uhrzeigersinn belastet und liegt am Anschlag 48 an. Läge die Tastrolle 44d nun fest, dann würde der Mechanismus verklemmen. Die Tastrolle 44d kann aber in der Richtung + y verschoben werden in Richtung auf eine Ecke 53 der Magnetbandkassette 3 oder 13.

Infolge des weiteren Einschiebens der Kassette 3 oder 13 wandert die Tastrolle 44b nun in Richtung auf die Ecke 53. Dabei schwenkt der Tasthebel 44 im Uhrzeigersinn um den momentanen Stand der Achse 44d. Die Achse 44a wandert damit im Uhrzeigersinn. Gleichzeitig verschwenkt der Öffnungshebel 43 ebenso im Uhrzeigersinn und zwar um die Achse 43a.

Ist die gerade eingeschobene Magnetbandkassette eine analoge Compactkassette 3, dann sieht der Öffnungshebel 43 mit einer Kante 43b die Kante 8a der analog bespielten Kassette. Die Kante 43b legt sich an die Kante 8a an. Der Anschlag 49 hat einen Abstand 54 von der Kante 8a, die Kante 43b hat von dem Ende 43c einer Kontur 43d des Öffnungshebels 43 einen Abstand 55. Das bedeutet, daß beim Anlegen der Kante 43b an die Kante 8a infolge der größeren Länge 55 des Abstandes zwischen der Kante 43b und dem Ende 43c kann das Ende 43c nicht an dem Anschlag 49 vorbeilaufen kann. Beim weiteren Einschieben der analogen Kassette 3 kann der Öffnungshebel 43 nicht in Einschieberichtung mitlaufen, weil er am Anschlag 49 festhängt. Das hat zu Folge, daß der Tasthebel 44 nun um die Achse 44a im Uhrzeigersinn weiterschwingt und die Tastrolle 44b über die Ecke 53 hinwegläuft. Da der Öffnungshebel 43 mit der Kante 43b an der Kante 8a entlanglaufen kann, läuft nun auch die Tastrolle 44b an der Kante 8a entlang bis die Kassette ihre mit einer Linie 56 angegebene Endposition erreicht hat.

Diese Endposition ist für die analoge Kassette 3 in Fig. 4 dargestellt. Man erkennt, wie die Kante 43b des Öffnungshebels 43 an der Kante 8a der analog bespielten Magnetbandkassette 3 anliegt und daß das Ende 43c der Kontur 43d nicht an dem Anschlag 49 vorbeilaufen konnte.

Der Bewegungsablauf, der hier beim Einschieben einer analogen Magnetbandkassette 3 beschrieben ist, wird auch ablaufen, wenn eine digitale Magnetbandkassette mit der verkehrten Seite eingeschoben wird. Die Führungskontur 22 befindet sich bei der digitalen Magnetbandkassette nur auf einer Seite, und zwar im Bereich der Hauptwand 18. Da die andere Hauptwand 19 keine Führungskontur 22 aufweist, erkennt der Erkennungsmechnismus praktisch eine analoge Magnetbandkassette und behandelt im nachfolgenden Ladevorgang die falsch eingesteckte digitale Magnetbandkassette wie eine analoge Magnetbandkassette. Im Endeffekt bedeutet dies, daß die falsch eingesteckte digitale Magnetbandkassette 13 in dieser Einschubrichtung nicht abgespielt werden kann, weil bestimmte Detektionen nicht erfolgen können.

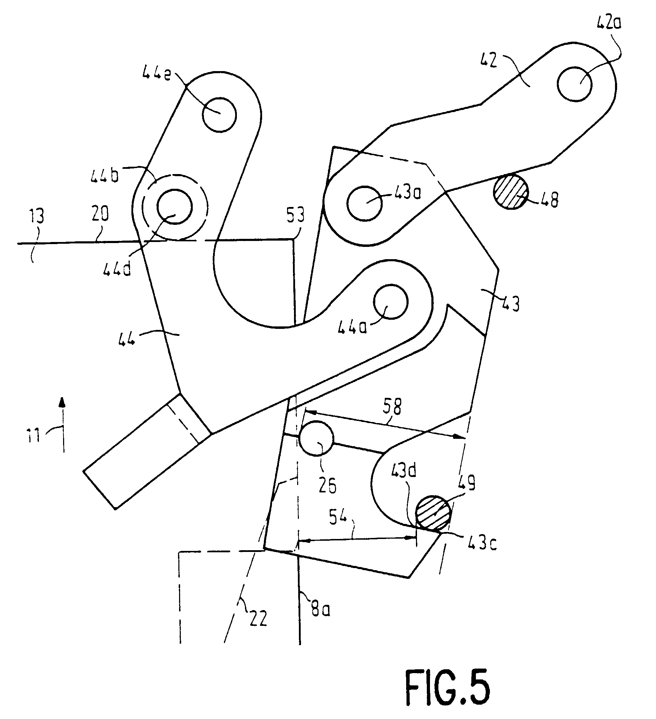

Wird beim Startvorgang nach Fig. 3 eine digitale Magnetbandkassette 13 eingeschoben, dann sind die Bewegungsabläufe des Erkennungsmechanismus zunächst denen des Einschiebens einer analogen Magnetbandkassette gleich. Der Lagerhebel 42 liegt am Anschlag 48 an. Der Öffnungshebel 43 liegt am Anschlag 49 an. Infolge der Kraft in Richtung +X auf den Stift 44e erfährt der Tasthebel 44 ein Moment im Uhrzeigersinn und verschwenkt. Die Tastrolle 44 wandert auf der Seitenwand 20 der digitalen Magnetbandkassette 13 in Richtung auf die Ecke 53 zu. Der Tasthebel 44 verschwenkt im Uhrzeigersinn und verschwenkt über die Achse 44a ebenfalls den Öffnungshebel 43 im Uhrzeigersinn. Die digitale Magnetbandkassette 13 weist die Führungskontur 22 auf. Ebenso hat die digitale Magnetbandkassette 13 eine Öffnungsseitenwand 17. Gegen diese Öffnungsseitenwand 17 fällt unter der Belastung des Tasthebels 44 der Öffnungshebel 43. Der Öffnungshebel kann über die digital bespielte Magnetbandkassette hinweglaufen, da diese die Erhöhung 51 nicht aufweist. Damit kann nun der Öffnungsstift 26 gegen die Öffnungsseitenwand 17 der Kassette 13 fallen. Beim weiteren Einschieben der Magnetbandkassette 13 wandert der Öffnungsstift 26 entlang der Wand 17, die im späteren Verlauf die Führungskontur 22 aufweist. Während des Entlanglaufens an der Öffnungsseitenwand 17 bleibt der Öffnungshebel 43 zunächst mit seiner Kontur 43d an dem Anschlag 49 hängen, weil ein Abstand 58 zwischen der Vorderseite des Öffnungsstiftes 26 und dem Ende 43c der Kontur 43d größer ist als der Abstand 54 (Fig. 5).

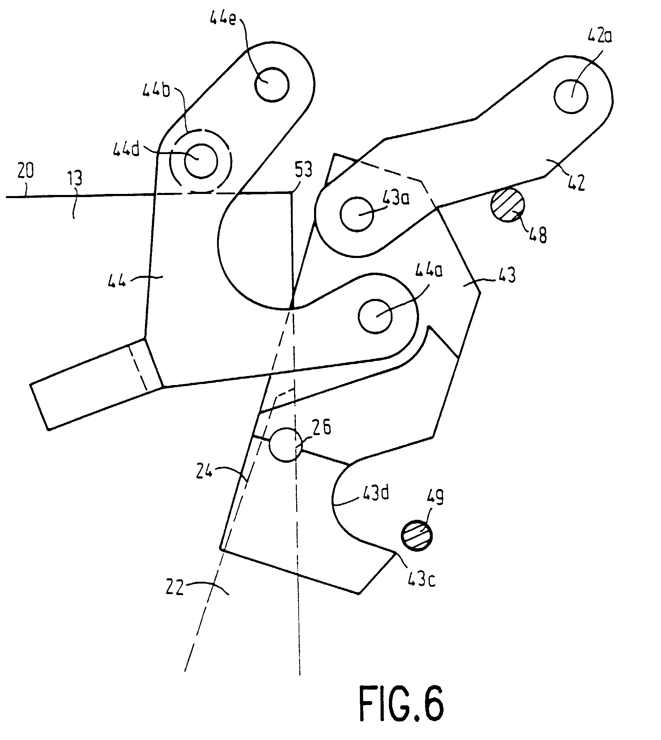

Fig. 6 zeigt nun eine Konstellation, bei der der Öffnungsstift 26 die Führungskontur 22 erkennt und in deren Einlaufteil 23 mit der Führungkante 24 einfällt. Bei diesem Einfallen hat sich der Öffnungshebel 43 so weit im Uhrzeigersinn bewegt, daß das Ende 43c der Kontur 43d von dem Anschlag 49 freigegeben wurde. Liegt der Öffnungsstift 26 in dem Einlaufteil 23, dann liegt der Öffnungsstift 26 an einer Kante 16a des Schiebers 16 an, verschiebt diesen aber noch nicht. Dies wird wie folgt erreicht: Die Schlinge 45d der Feder 45 erzeugt eine Kraftkomponente in Richtung -y auf den Stift 44e (Fig. 3). Die Kassette 13 wird nun weiter eingeschoben. Beide Arme 45a und 45b der Schlingfeder 45 biegen sich aufeinander zu.

Zunächst liegt der Lagerhebel 42 noch an dem Anschlag 48 an. Da der Öffnungshebel 43 frei geworden ist, weil das Ende 43c der Kontur 43d den Anschlag 49 passieren kann, drückt die Kassette 13 den Erkennungsmechanismus 41 im Uhrzeigersinn um die Achse 42a. Dabei verläßt der Lagerhebel 42 den Anschlag 48, weil er ebenfalls eine Drehbewegung im Uhrzeigersinn ausführt. Durch dieses Verdrehen des Lagerhebels 42 zum Öffnungshebel 43 wird die Kraft des Öffnungsstiftes 26 auf die Führungskontur 22 minimiert. Beim Verdrehen des Erkennungsmechanismus 41 und dem weiteren Spannen der Öffnungsfeder 45 wandert die Schlinge 45c um den Stift 46 entgegen dem Uhrzeigersinn und bildet sich allmählich an dem Stift 44e über den Arm 45a eine Komponente +Y aus. Während der Drehbewegung ist eine Führungslasche 44f an einer Kontur 33a des Schachtes 33 geführt.

Das bedeutet also, daß beim Einschieben der Kassette 13 der Tasthebel 44 die Öffnungsfeder 45 spannt, die ihrerseits über den Stift 44e auf die Kassette 13 eine entgegen der Einschubkraft gerichtete Kraft und außerdem eine von der Kassettenecke 53 weg wirkende Kraft ausübt, so daß die Tastrolle 44b zunächst daran gehindert wird, um die Kassettenecke 53 herumzufahren.

Beim weiteren Verschieben der Kassette 13 und damit bei einem Nachlassen der von der Feder 45 auf die Tastrolle 44b wirkenden Kraft, die von der Kassettenecke 53 weg gerichtet ist, fährt die Tastrolle 44b auf die Kassettenecke 53 zu und umfährt diese, sobald sich die Kraftwirkung von einer Ausrichtung von der Kassettenecke 53 weg umkehrt in eine Kraftwirkung auf die Kassettenecke 53 zu, womit der Öffnungsstift 26 beginnt, den Schieber 16 entgegen der Einschiebrichtung zu verschieben und damit die Bedienungsöffnungen 9, 10 zu öffnen (Fig. 7).

Wie Fig. 7 zeigt, rollt die Tastrolle 44b dabei in Richtung auf die Ecke 53 zu. Die Kraft in +Y Richtung auf den Stift 44e nimmt aufgrund der Kraftwirkung des Armes 45a weiter zu (Fig. 3). Sobald diese Kraft in Richtung +Y die Kraft der Schlinge 45d in Richtung -Y überschreitet, läuft die Tastrolle 44b um die Ecke 53 herum. Nun entspannt sich die Öffnungsfeder 45, indem sie die Tastrolle 44 an der Öffnungsseitenwand 17 entlang schiebt, wobei der Öffnungsstift 26 den Schieber 16 entgegen der Einschubrichtung über die Kante 16a verschiebt.

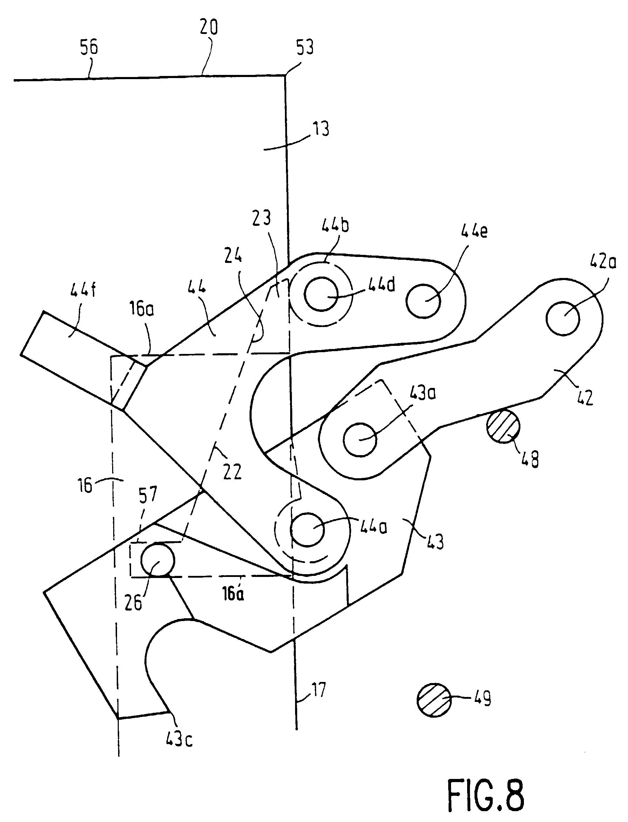

In gegenläufiger Bewegung wird die Kassette 13 in Richtung des Pfeiles 11 weiter eingeschoben, bis sie die Endposition 56 erreicht, in der der Schieber 16 die Bedienungsöffnungen 9 und 10 freigegeben hat (Fig. 1c, 8).

Der Augenblick, in dem der Schieber beim Einschieben der Kassette geöffnet wird, wird bestimmt von dem Kräfteverhältnis +Y/-Y. Der Wechsel des Kräfteverhältnisses findet in dem Augenblick statt, wo die Tastrolle 44b die Ecke 53 umrundet. Der Wechsel des Kräfteverhältnisses ist beeinflußbar durch die Federkonstante, die Federform und der Position der Feder zur Tastrolle 44b.

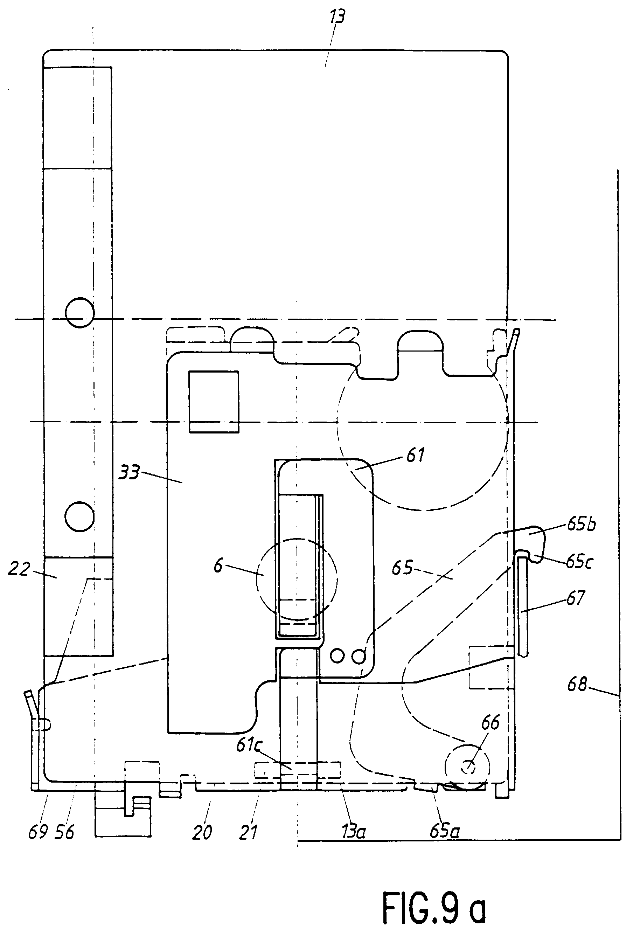

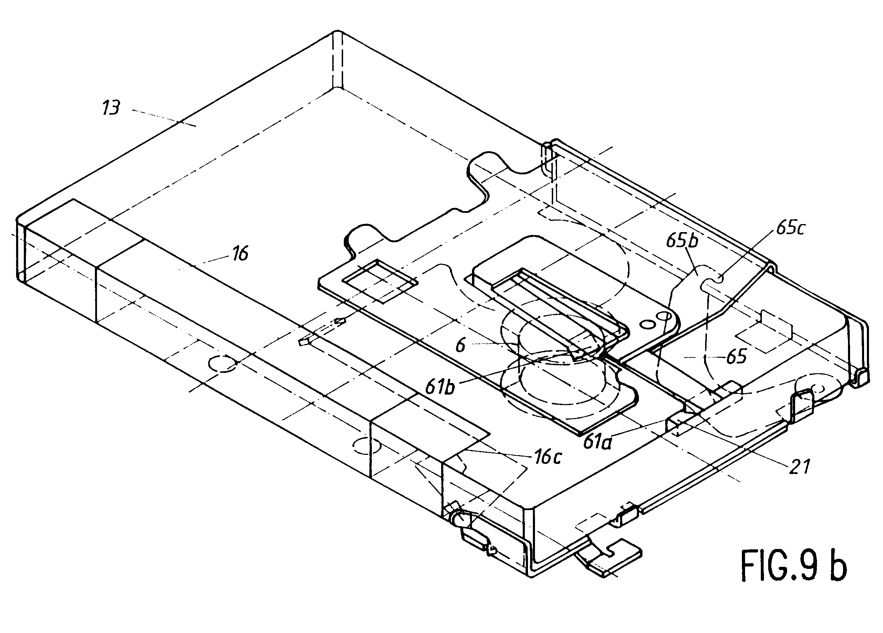

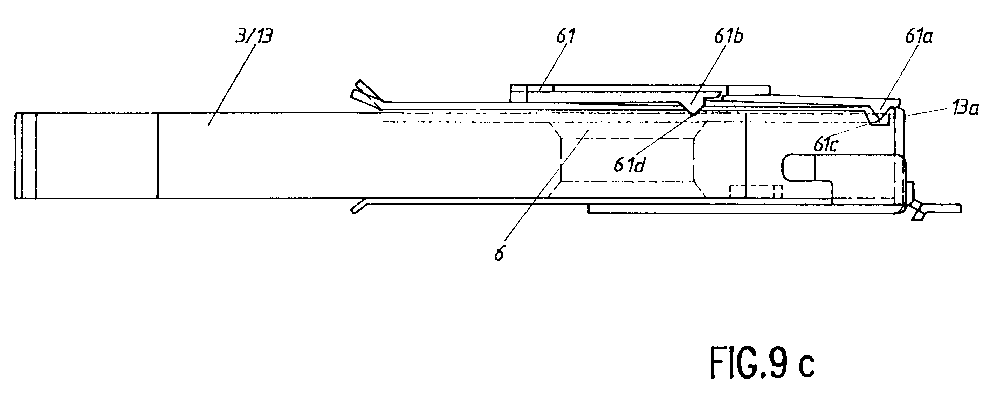

Während die Magnetbandkassette in den Kassettenschacht eingehoben wird, wirkt auf die Kassette eine Gegenkraft des Erkennungsmechanismus, die von der Öffnungsfeder 45 aufgebracht wird. Diese Gegenkraft wirkt so lange, bis die Magnetbandkassette ihre Endposition 56 im Kassettenschacht 33 eingenommen hat. Bei der digital bespielten Kassette liegt dabei der Öffnungsstift 26 hinter einer Arretierungskante 57. Außerdem liegt der Schieber 16 mit seiner Kante 16a am Öffnungsstift 26 an. Es muß nun sichergestellt sein, daß der Öffnungsstift aus dieser Position nicht infolge von auftretenden Toleranzen herauslaufen kann. Nur dann bleiben nämlich die Bedienungsöffnungen 9 und 10 vollständig offen. Die Sicherung des Öffnungsstiftes 26 hinter der Arretierungskante 57 erfolgt mit Hilfe eines Kassettenhalters 61 (Fig. 9a). Dieser Kassettenhalter 61 weist Nocken 61a und 61b auf (Fig. 9b). Der Nocken 61a wirkt mit der Mitnehmernut 21 der digitalen Magnetbandkassette 13 zusammen. Der Nocken 61b wirkt mit dem Wickelloch 6 der analogen Magnetbandkassette 3 zusammen.

Wenn die digitale Magnetbandkassette 13 nahezu ihre Endposition erreicht hat, dann fällt der Nocken 61a mit seiner Spitze 61c gerade hinter einen Rand 13a der Mitnehmernut 21 der digitalen Magnetbandkassette 13 (Fig. 9c). Während des weiteren Einschiebens der Magnetbandkassette 13 in den Kassettenschacht 33 stößt die vordere Seitenwand 20 der digitalen Magnetbandkassette 13 gegen eine Lasche 65a eines Blockierhebels 65. Dieser Blockierhebel 65 ist unterhalb des Schachtes 33 schwenkbar auf einem Stift 66 befestigt, der seinerseits wieder im Schacht befestigt ist. Der Blockierhebel 65 ist an seinem freien Ende 65b mit einem Arretierhaken 65c versehen. Dieser Haken 65c ist zunächst auf einem Anschlag 67 des Laufwerkschassis 68 verhakt.

Stößt die vordere Seitenwand 20 der digitalen Magnetbandkassette 13 gegen die Lasche 65a des Arretierhebels 65, dann wird die Verhakung zwischen dem Anschlag 67 und dem Arretierhaken 65c aufgehoben. Der Arretierhebel 65 ist im Uhrzeigersinn von einer nicht dargestellten Feder federbelastet. Wird die Verhakung gelöst, dann schwenkt die einschiebende Magnetbandkassette 13 den Arretierhebel entgegen dem Uhrzeigersinn und hebt die Blockierung des Schachtes 33 gegenüber dem Chassis auf. Die Kassette 13 hat an sich das Bestreben, von dem Arretierhebel, der im Uhrzeigersinn federbelastet ist, zurückgeschoben zu werden. Dieses Zurückschieben wird aber verhinderet von dem Nocken 61a des Kassettenhalters 61, der in die Mitnehmernut 21 eingefallen ist.

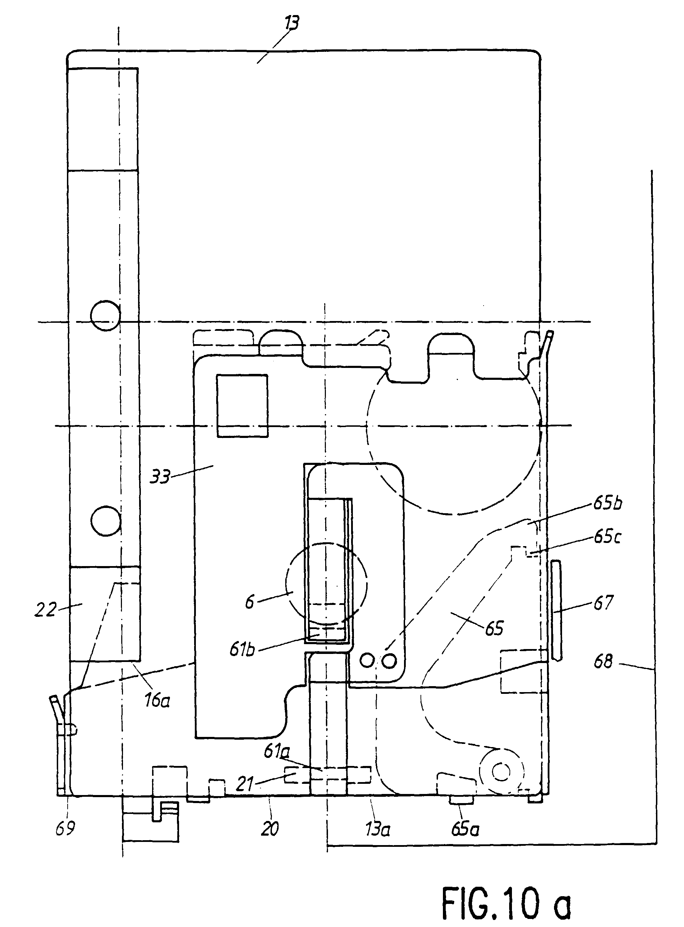

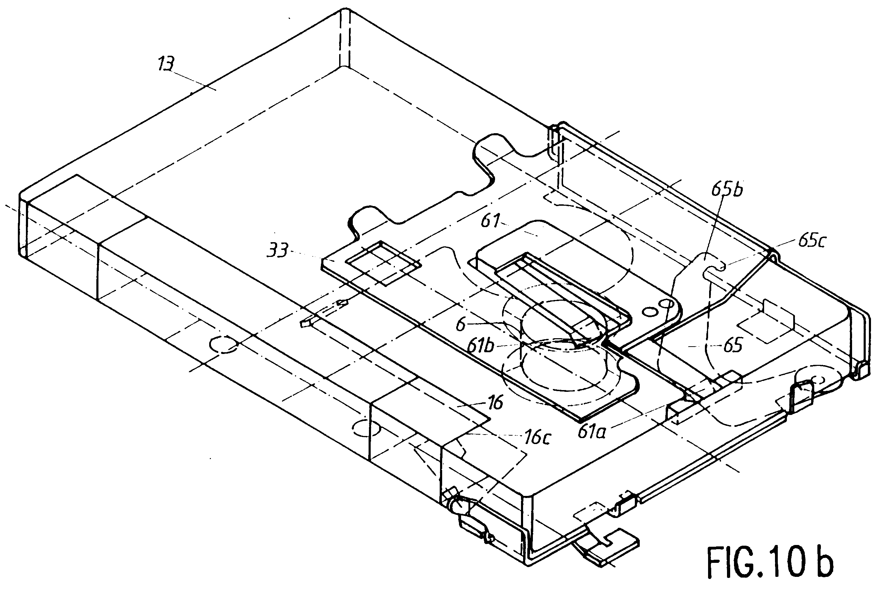

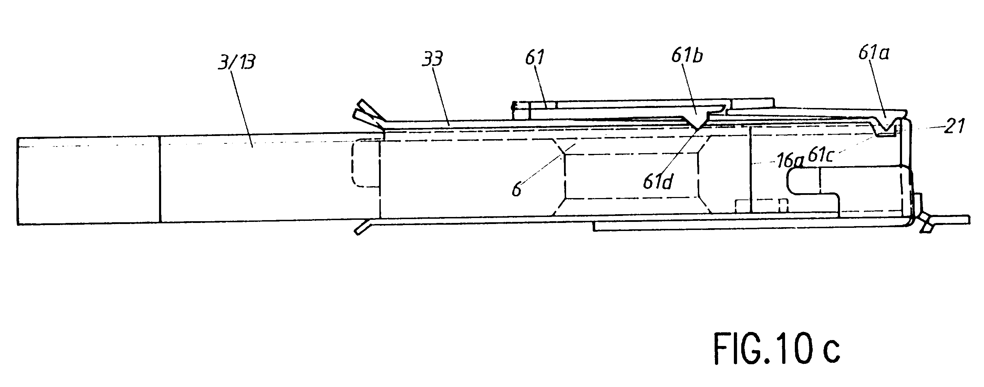

Fig. 10a zeigt die gegenseitigen Stellungen der Bauteile bei völlig in den Kassettenschacht 33 eingeschobener Kassette 13. Der Arretierhebel 65 ist entgegen dem Uhrzeigersinn verschwenkt, die Kassette 13 sitzt mit ihrer vorderen Seitenwand 20 in der Endposition 56 am Schacht 33, und der Nocken 61a des Kassettenhalters 61 ist voll in die Mitnehmernut 21 eingefallen. Nun ist die Magnetbandkassette 13 in vorgegebener Stellung im Schacht 33 festgelegt und kann mit dem Schacht 33 zusammen verschoben werden. Der Öffnungsstift 26 kann nicht aus der Arretierungskante 57 herausfahren.

Wird eine analoge Magnetbandkassette 3 in den Schacht 33 eingeschoben, dann fällt der Nocken 61b des Kassettenhalters 61 entsprechend der Konfiguration bei der digitalen Magnetbandkassette 13 zunächst mit seiner Spitze 61d in das Wickelloch 6 ein (Fig. 10c). Dies ist der Augenblick, wo die vordere Seitenwand 12 der analogen Magnetbandkassette 3 gegen die Lasche 65a stößt (Fig. 10a). Der Arretierungshaken 65c wird nun aus dem Anschlag 67 herausgeschwenkt, und der Arretierhebel 65 schwenkt unter der schiebenden Kraft der analogen Magnetbandkassette 3 entgegen dem Uhrzeigersinn. Hat die Magnetbandkassette 3 ihre Endposition im Schacht 33 erreicht, dann ist auch der Nocken 61b vollständig in das Wickelloch 6 eingefallen. Die analoge Magnetbandkassette 3 ist nun wieder eindeutig gegenüber dem Schacht 33 positioniert und kann zusammen mit dem Schacht weiter verschoben werden.

Mit diesen gegenseitigen Verstellvorgängen ist sichergestellt, daß der Schacht zusammen mit der Magnetbandkassette nur dann weiter verschoben werden kann, wenn der Schieber 16 vollständig in seiner Öffnungsstellung steht. Wichtig ist dabei, daß der Nocken 61a bereits in die Mitnehmernut, wenn auch nur zum Teil eingefallen ist, wenn der Arretierhebel beginnt, aus seiner Arretierung herauszulaufen. Beim Beginnen des Herauslaufens muß bereits ein fester gegenseitiger Kontakt zwischen Magnetbandkassette und Nocken 61a bestehen.

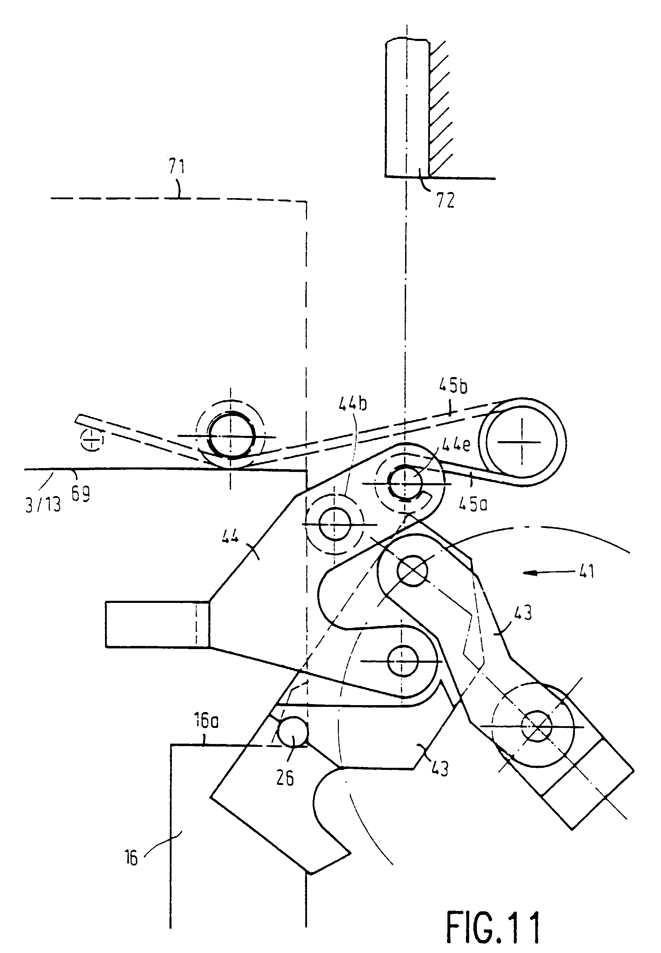

Fig. 11 zeigt eine Variante des Lademechanismus 32. Bei dem bisher beschriebenen Ladevorgang wird die Magnetbandkassette von Hand eingeschoben, und noch während des von Hand Einschiebens wird bei einer digitalen Kassette 13 der Schieber 16 geöffnet. Es gibt aber auch Servolaufwerke, bei denen ein Teil bzw. der letzte Teil der Einzugsbewegung maschinell von einem Motor übernommen wird. Der Lademechanismus 32 ist auch an einen derartigen maschinelleren Einzug anpaßbar. Es ist wünschenswert, daß der Schieber der digitalen Kassette beim Einsatz des maschinellen Einzuges während des letzten Teiles der Einzugsbewegung geöffnet wird, während der Motor den Einzug übernommen hat. Am Lademechanismus ist ein Schalter vorgesehen, der am Ende des von Hand vorgenommenen Einschubweges den Einzugsmotor startet, der dann den Kassettenschacht in Einschubrichtung maschinell weiterzieht. Dieser maschinelle Einzug muß begleitet sein von einem maschinellen Öffnen des Schiebers 16. Das bedeutet, daß der Erkennungsmechanismus 41 während des maschinellen Ladevorgangs den Schieber 16 in einer gegenläufigen Bewegung verschieben muß. Der Öffnungsvorgang des Schiebers läuft dabei in derselben Weise ab, wie es in Verbindung mit Fig. 7 beschrieben ist, allerdings mit dem Unterschied, daß nicht mehr die Öffnungsfeder 45 den Schieber 16 beiseite schiebt, wenn die Tastrolle 44b die Ecke 53 umfahren hat. Das bedeutet, daß der Schieber noch geschlossen ist, wenn die Kassette die Anschlagposition 69 erreicht hat. Diese Anschlagposition 69 ist später beim Ausschieben der Kassette auch die Eject-Position. Die Position ist dieselbe wie bei der vorigen Ausführung (beim Handeinschieben), aber der Schieber 16 ist jetzt noch nicht geöffnet.

Dazu ist der Erkennungsmechanismus 41 insofern geändert, als die Öffnungsfeder 45 nun schwächer ausgelegt ist. Sie ist zwar in der Lage, den Erkennungsmechanismus in die Startposition nach Fig. 3 zurückzuschieben; sie ist aber nicht in der Lage, aus eigener Kraft den Schieber 16 über den Öffnungshebel 43 und den Öffnungsstift 26 zu verschieben.

Erreicht die analoge Kassette 3 oder die digitale Kassette 13 die Anschlagposition 69, dann wird auf nicht beschriebene Weise der nicht dargestellte Einzugsmotor gestartet. Der Kassettenschacht 33 fährt nun in Einschubrichtung 11 weiter in eine Position oberhalb der Spielposition, in die die Kassette aus dieser Endstellung 71 heraus abgesenkt wird. Es ist ein Anschlag 72 vorgesehen, gegen den der Stift 44e des Tasthebels 44 auf dem Wege zwischen den Positionen 69 und 71 der Kassette stößt. Dieses Anstoßen hat bei weiterfahrender Kassette 13 zur Folge, daß der Tasthebel und der gesamte Erkennungsmechanismus 41 stehen bleiben, so daß bei weiterfahrender Kassette 13 von dem Öffnungsstift 26 der Schieber 16 in die Öffnungsstellung geschoben wird.

Beim Einschieben einer analogen Kassette 3 sieht der Anschlag 72 den Stift 44e nicht. Weil der Öffnungshebel 43 an dem Anschlag 49 hängen bleibt (Fig. 4), fährt die analoge Kassette 3 an dem Erkennungsmechanismus 41 vorbei und gelangt der Stift 44e gar nicht in die Nähe des Anschlages 72.

Der Kassettenhalter 61 muß in diesem Fall eine größere Kraft zum Festhalten der Kassette 13 aufbringen, um beim Öffnen des Schiebers 16 der Schließkraft der nicht dargestellten Schieberfeder entgegenzuwirken. Sie muß deshalb konstruktiv so ausgebildet sein, daß sie der Schließkraft entgegenwirkt. Diese verstärkte Kraft braucht der Kassettenhalter 61 aber nur für die Zeit aufzubringen, während der der Schieber verschoben wird. Danach ist der Öffnungsstift 26 nämlich wieder zwischen der Arretierkante 57 und der Schieberkante 16a arretiert.

## Patentansprüche

1. Anordnung, bestehend aus einem Magnetbandkassettengerät mit einem Laufwerk und mit einem Lademechanismus (32) mit Einschubraum für Magnetbandkassetten (3, 13), in den die Kassetten einschiebbar sind, und aus Magnetbandkassetten (3, 13), die in planparallelen Hauptwänden (7a, 7b; 18, 19) Vertiefungen (6) und in einer die Hauptwände (7a, 7b; 18, 19) verbindenden Seitenwand (8, 17) Bedienungsöffnungen (9, 10) zum Einführen eines Tonkopfes und von Andruckrollen aufweisen, wobei zum Handhaben von Magnetbandkassettentypen (3, 13) mit unterschiedlichen Bandspielnormen und Gehäusegestaltungen ein Erkennungsmechanismus vorgesehen ist, der die Kassettenseitenwand (8, 17) mit den Bedienungsöffnungen abtastet und ein Tastglied aufweist, das je nach Kassettentyp beim Einschieben einer Kassette entweder an dieser Kassettenwand (8, 17) entlangläuft oder aber in eine Führungskontur einfährt, um damit vor einen Schieber dieses Kassettentyps zu gelangen und diesen so weit zu verschieben, daß die Bedienungsöffnungen freigelegt sind, wobei der Erkennungsmechanismus (41) beim beginnenden Einschieben einer Magnetbandkassette in einer Längsrichtung, in der die Bandwickel hintereinander liegen, aktiviert wird, indem die beim Einschieben vorn liegende kurze Seitenwand den Taststift mitnimmt, ohne daß der Schieber zu diesem Zeitpunkt schon in Richtung auf die Stellung, in der er die Bedienungsöffnungen freigibt, belastet wird, und wobei der Taststift bei weiterem Einschieben zur langen Kassettenseitenwand (8, 17) mit den Bedienungsöffnungen (9, 10) wandert und diese entlangfährt, wobei der Taststift den gerade eingeschobenen Kassettentyp erkennt und entsprechend dessen Bauweise entweder bei dem einen Typ diesen bis zum Ende des Einschubweges unbehindert entlangfährt oder bei dem anderen Typ in die Führungskontur einfährt, um den Schieber (16) gegen Ende des Einschubweges zu öffnen.

2. Anordnung nach Anspruch 1, dadurch gekennzeichnet, daß
- der Erkennungsmechanismus (41) aus einer Mehrgelenkhebelvorrichtung besteht, die unter Federwirkung mit Kassettenseitenwänden (8, 12; 17, 20) beiderseits einer Kassettenecke (53) zusammenwirkt, die in Einschubrichtung das vordere Ende der Öffnungsseitenwand (8, 17) der Kassette (3, 13) begrenzt,
- ein Tastglied (44b) an einem Tasthebel (44) der Mehrgelenkhebelvorrichtung beim Einschieben einer Kassette (3, 13) von der in Einschubrichtung vorn liegenden Kassettenseitenwand (12. 20) gegen die Federwirkung mitgenommen wird,
- ein Öffnungshebel (43) der Mehrgelenkhebelvorrichtung gleichzeitig die Öffnungsseitenwand (8, 17) nach einer Führungskontur (22) der Magnetbandkassette (13) mit dem Schieber (16) absucht.

3. Anordnung nach einem der Ansprüche 1 oder 2, dadurch gekennzeichnet, daß der Öffnungshebel (3) eine Kontur (43d) aufweist, die mit einem Anschlag (49) des Kassettenschachtes (33) derart zusammenwirkt, daß der Öffnungshebel (43) beim Auffinden einer Führungsikontur (22) von dem Tastglied (44b) an dem Anschlag (49) vorbei in Einschubrichtung mitgenommen werden kann, während er beim Fehlen einer Führungskontur (22) an dem Anschlag (49) hängen bleibt.

4. Anordnung nach einem der Ansprüche 1 bis 3, dadurch gekennzeichnet, daß beim Mitnehmen des Öffnungshebels (43) in Einschubrichtung (11) der Öffnungsbeginn des Schiebers verschoben wird auf eine derartige gegenseitige Lage von Kassette (13) und Einschuböffnung in der Frontblende des Gerätes, daß sich der Schieber bei Öffnungsbeginn bereits hinter der Vorderkante der Frontblende befindet (korrekt eingelegte digitale Kassette).

5. Anordnung nach einem der Ansprüche 1 bis 3, dadurch gekennzeichnet, daß der Öffnungshebel (43) beim Hängenbleiben an dem Anschlag (49) beim Einschieben der Kassette (3) gezwungen wird, an der Öffnungsseitenwand (8) entlang zu laufen, wobei das Tastglied (44b) gezwungen wird, bereits bei geringer Federwirkung die Kassettenecke (53) zu umfahren (analoge oder fehlerhaft eingelegte digitale Kassette).

6. Anordnung nach einem der Ansprüche 1 bis 5, dadurch gekennzeichnet, daß der Tasthebel (44) mittels eines Gelenkes (44a) gelenkig an dem Öffnungshebel (43) angreift, der wiederum mittels eines Gelenkes (43a) gelenkig an einem Lagerhebel (42) angreift, der seinerseits gelenkig am Kassettenschacht (33) angeordnet ist, wobei der Tasthebel (44) mittels einer Öffnungsfeder (45) derart mit dem Kassettenschacht (33) verbunden ist, daß die sich beim Einschieben der Magnetbandkassette (3, 13) spannende Öffnungsfeder (45) auf den Tasthebel (44) und über diesen auf den Öffnungshebel (43) ein im Uhrzeigersinn gerichtetes Moment ausübt, das das Tastglied (44b) in Richtung auf die Kassettenecke (53) und den Öffnungshebel (43) mit einem freien Hebelende in Richtung auf die Öffnungsseitenwand (8, 17) der Kassette (3, 13) belastet.

7. Anordnung nach einem der Ansprüche 1 bis 6, dadurch gekennzeichnet, daß am Öffnungshebel (43) ein Öffnungsstift (26) vorgesehen ist, der beim Vorliegen einer Führungskontur (22) in diese einläuft, wodurch die Kontur (43d) des Öffnungshebels (43) den Anschlag (49) freigeben kann.

8. Anordnung nach einem der Ansprüche 1 bis 7, dadurch gekennzeichnet, daß bei freigegebenem Öffnungshebel (43), mitgenommen von der Kassette (13) über das Tastglied (44b) und den Tasthebel (44) sowie das Gelenk (44a) und das Gelenk (43a), der Lagerhebel (42) im Uhrzeigersinn um seine Achse (42a) schwenkt, wobei der Öffnungsstift (26) konform mit der Kassette in Einschubrichtung (11) mitgenommen wird, so daS er den Schieber (16) gegenüber der Kassette (13) nicht verschieben kann.

9. Anordnung nach einem der Ansprüche 1 bis 8, dadurch gekennzeichnet, daß durch die Achse (44d) des Tastgliedes (44b) mit der Achse (44a) zwischen dem Tasthebel (44) und dem Öffnungshebel (43) eine Verbindungslinie (44c) geht und daß auf einer Senkrechten auf dieser Verbindungslinie (44c), die in der Achse (44d) errichtet ist, der Angriffspunkt (44a) der Öffnungsfeder (45) vorgesehen ist, die sich im Kassettenschacht (33) abstützt.

10. Anordnung nach einem der Ansprüche 1 bis 9, dadurch gekennzeichnet, daß beim Einschieben der Kassette (13) der Tasthebel (44) die Öffnungsfeder (45) spannt, die ihrerseits über den Stift (44e) auf die Kassette (13) eine entgegen der Einschubkraft gerichtete Kraft und außerdem eine von der Kassettenecke (53) weg wirkende Kraft ausübt, so daß das Tastglied (44b) zunächst daran gehindert wird, um die Kassettenecke (53) herumzufahren.

11. Anordnung nach einem der Ansprüche 1 bis 10, dadurch gekennzeichnet, daß bei weiterem Einschieben der Kassette und damit bei einem Nachlassen der von der Kassettenecke (53) weg gerichteten Kraft das Tastglied (44b) auf die Kassettenecke (53) zufährt und diese umfährt, sobald sich die Kraftwirkung von einer Ausrichtung von der Kassettenecke (53) weg umkehrt in eine Kraftwirkung auf die Kassettenecke (53) zu, womit der Öffnungsstift (26) beginnt, den Schieber (16) entgegen der Einschubrichtung zu verschieben und damit die Bedienungsöffnungen (9, 10) zu öffnen.

12. Anordnung nach einem der Ansprüche 1 bis 11, dadurch gekennzeichnet, daß die Öffnungsfeder (45) eine Schlingfeder ist mit einem ersten Federarm (45a), der am Stift (44e) des Tasthebels (44) angreift, und einem zweiten Federarm (45b), der an seinem von der Federschlinge (45c) abliegenden Ende eine weitere Schlinge (45d) aufweist, von der ein dritter Federarm (45e) absteht, dessen freies Ende an einem Anschlag (47) anliegt.

13. Anordnung nach Anspruch 12, dadurch gekennzeichnet, daß sich der Mittelpunkt (45f) der Federschlinge (45c) stets in einem Bereich befindet, der definierbar ist durch eine Verlängerung (8b) der Öffnungsseitenwand (17) in Einschubrichtung und eine Parallele (42b) zu dieser Linie, die die Achse (42a) schneidet, wobei sich die Federarme (45a, 45b) in Richtung der Verlängerung der Öffnungsseitenwand (17) erstrecken.

14. Anordnung nach einem der Ansrpüche 1 bis 13, dadurch gekennzeichnet, daß der Öffnungsstift (26), nachdem das Tastglied (44b) beim Abtasten einer digitalen Magnetbandkassette (13) die Ecke (53) umlaufen hat, beim weiteren Einschieben der Kassette in der Führungskontur (22) entlang läuft, bis er hinter eine Arretierungskante (57) fällt, wobei der Öffnungsstift (26) den Schieber (16) von der Schließstellung in die Öffnungsstellulng überführt hat.

15. Anordnung nach einem der Ansprüche 1 bis 14, dadurch gekenzeichnet, daß der Öffnungsstift (26) hinter der Arretierungskante (57) gesichert wird mittels eines am Kassettenschacht angeordneten Kassettenhalters (61), der in eine Mitnehmernut (21) der digitalen Magnetbandkassette (13) einfällt.

16. Anordnung nach Anspruch 15, dadurch gekennzeichnet, daß der Kassettenhalter (61) mittels eines Nockens (61a) in die Mitnehmernut (21) einfällt.

17. Anordnung nach einem der Ansprüche 1 bis 16, dadurch gekennzeichnet, daß
- der Kassettenschacht (33), nachdem eine Magnetbandkassette (3, 13) in ihn bis zu einer Endpositin (56) eingeschoben worden ist, mit der Kassette (3, 13) zusammen noch eine Weglänge weiterschiebbar ist, bis in eine Anschlagposition (69),
- der Kassettenschacht (33) mittels einer Arretierung gegen ein Verschieben festgelegt ist bis zu dem Zeitpunkt, in dem die Kassette (3, 13) in ihm ihre Endposition (56) erreicht hat,
- die Arretierung (65) des Kassettenschachtes (33) erst aufgehoben wird, wenn der Kassettenhalter (61) die Kassette (3, 13) bereits ergriffen hat.

18. Anordnung nach Anspruch 8, dadurch gekennzeichnet, daß der Kassettenhalter (61) die Kassette (3, 13) mittels eines Nockenteiles (61c, 61d) bei Aufhebung der Arretierung des Kassettenschachtes (33) leicht ergriffen hat und daß der Nocken (61a) der digitalen Kassette (13) in die Mitnehmernut (21) bzw. der Nocken (61b) der analogen Kassette (3) in ein Wickelloch (6) vollständig formschlüssig eingelaufen sind, wenn die Kassette (3, 13) ihre Anschlagposition (69) in dem Kassettenschacht (33) erreicht hat.

19. Anordnung nach Anspruch 8, dadurch gekennzeichnet, daß die Arretierung des Kassettenschachtes (33) mittels eines Arretierhebels (65) vorgenommen wird, der mit einem Arretierhaken (65c) hinter einem Anschlag (67) des Chassis (68) verhakbar, von der Kassette (3, 13) aus der Verhakung lösbar und sein freies Ende (65b) im Uhrzeigersinn federbelastet ist.

## Claims

1. Arrangement comprising a magnetic-tape-cassette apparatus, which apparatus comprises a deck and a loading mechanism (32) having a holder for magnetic-tape cassettes (3, 13), into which holder the cassettes can be inserted, and magnetic-tape cassettes (3, 13) having recesses (6) in plane-parallel main walls (7a, 7b; 18, 19) and having in a side wall (8, 17) interconnecting the main walls (7a, 7b; 18, 19) access openings (9, 10) for the entry of a sound head and pressure rollers, a detection mechanism being provided in order to handle magnetic-tape cassette types (3, 13) with different tape-recording standards and housing configurations, which detection mechanism senses the cassette side wall (8, 17) having the access openings (8, 17) and comprises a sensing element which upon insertion of a cassette, depending on the cassette type, either moves past this cassette wall (8, 17) or engages a guide profile in order to be positioned before a sliding cover of this cassette type and move said cover so far that the access openings are exposed, wherein when insertion of a magnetic-tape cassette in a longitudinal direction, in which the tape spools are juxtaposed, begins the detection mechanism (41) is activated in that the short side wall which faces forward during insertion moves the sensing pin without the sliding cover at this instant already being urged towards the position in which it exposes the access openings, and wherein as insertion proceeds the sensing pin moves to the long cassette side wall (8, 17) having the access openings (9, 10) and moves along this wall, the sensing pin detecting the cassette type just inserted and depending on the construction thereof either moves freely past said wall up to the end of the insertion path for the one type or engages the guide profile in order to open the sliding cover (16) towards the end of the insertion path for the other type.

2. An arrangement as claimed in Claim 1, characterised in that
- the detection mechanism (41) comprises a multiple-lever system which under spring load cooperates with cassette side walls (8, 12; 17, 20) at both sides of a cassette corner (53) which in the direction of insertion bounds the forward end of the partly open side wall (8, 17) of the cassette (3, 13),
- upon insertion of a cassette (3, 13) a sensing element (44b) on a sensing lever (44) of the multiple-lever system is moved against the spring load by the cassette side wall (12, 20) facing forward in the direction of insertion,
- at the same time an opening lever (43) of the multiple-lever system senses the partly open side wall (8, 17) to detect a guide profile (22) of the magnetic-tape cassette (13) comprising the sliding cover (16).

3. An arrangement as claimed in Claim 1 or 2, characterised in that the opening lever (3) has a profile (43d) which cooperates with a stop (49) of the cassette holder (33) in such a manner that upon detection of a guide profile (22) by the sensing element (44b) the opening lever (43) can be moved in the direction of insertion past the stop (49) and in the absence of a guide profile (22) said opening lever remains in engagement with the stop (49).

4. An arrangement as claimed in any one of the Claims 1 to 3, characterised in that when the opening lever (43) is moved along in the direction of insertion (11) the point where opening of the sliding cover begins is transferred to such a mutual position of the cassette (13) and the loading aperture in the front panel of the apparatus that when opening begins the sliding cover is already situated behind the front edge of the front panel (correctly inserted digital cassette).

5. An arrangement as claimed in any one of the Claims 1 to 3, characterised in that when it is arrested by the stop (49) upon insertion of the cassette (3) the opening lever (43) is forced to move along the partly open side wall (8), the sensing element (44b) being forced to move around the cassette corner (53), already in the case of a small spring load (analog or misinserted digital cassette).

6. An arrangement as claimed in any one of the Claims 1 to 5, characterised in that the sensing lever (44) pivotally cooperates with the opening lever (43) by means of a pivot (44a), which opening lever cooperates with a supporting lever (42) by means of a pivot (43a), which supporting lever is pivotally mounted on the cassette holder (33), the sensing lever (44) being connected to the cassette holder (33) by means of an opener spring (45) in such a manner that the opener spring (45), which is tensioned upon insertion of the magnetic-tape cassette (3, 13), exerts a clockwise torque on the sensing lever (44) and thus on the opening lever (43), which torque urges the sensing lever (44b) towards the cassette corner (53) and the free lever end of the opening lever (43) towards the partly open side wall (8, 17) of the cassette (3, 13).

7. An arrangement as claimed in any one of the Claims 1 to 6, characterised in that the opening lever (43) carries an opener pin (26) which engages a guide profile (22) when it encounters said profile, thereby enabling the profile (43d) of the opening lever (43) to be disengaged from the stop (49).

8. An arrangement as claimed in any one of the Claims 1 to 7, characterised in that with the opening lever (43) disengaged, actuated by the cassette (13) *via* the sensing element (44b) and the sensing lever (44) as well as the pivot (44a) and the pivot (43a), the supporting lever (42) pivots clockwise about its spindle (42a), the opener pin (26) being moved accordingly with the cassette in the direction of insertion (11), so that it cannot move the sliding cover (16) relative to the cassette (13).

9. An arrangement as claimed in any one of the Claims 1 to 8, characterised in that a connecting line (44c) extends through the axis of the spindle (44d) of the sensing lever (44b) and the axis of the spindle (44a) between the sensing lever (44) and the opening lever (43), and the point (44a) of application of the opener spring (45) is situated on a normal to said connecting line (44c) at the location of the axis of the spindle (44d), which spring is supported in the cassette holder (33).

10. An arrangement as claimed in any one of the Claims 1 to 9, characterised in that upon insertion of the cassette (13) the sensing lever (44) tensions the opener spring (45) which, *via* the pin (44e), exerts a force directed oppositely to the insertion force on the cassette (13) and also exerts a force acting in a direction away from the cassette corner (53), thereby initially preventing the sensing element (44b) from moving around the cassette corner (53).

11. An arrangement as claimed in any one of the Claims 1 to 10, characterised in that when the cassette is inserted deeper and consequently the force directed away from the cassette corner (53) ceases the sensing element (44b) moves towards the cassette corner (53) and moves around said corner as soon as the action of the force changes from an orientation away from the cassette corner (53) to an orientation towards the cassette corner (53), upon which the opener pin (26) begins to move the sliding cover (16) in a direction opposite to the direction of insertion and thus to expose the access openings (9, 10).

12. An arrangement as claimed in any one of the Claims 1 to 11, characterised in that the opener spring (45) is a loop spring having a first spring arm (45a) acting upon the pin (44e) of the sensing lever (44) and having a second spring arm (45b) which at its end which is remote from the spring loop (45c) has a further loop (45d), from which a third spring arm (45e) projects whose free end lies against a stop (47).

13. An arrangement as claimed in Claim 12, characterised in that the centre (45f) of the spring loop (45c) is always situated in an area which can be defined by an extension (8b) of the partly open side wall (17) in the direction of insertion and a line (42b) parallel thereto and intersecting the spindle (42a), the spring arms (45a, 45b) extending towards the extension of the partly open side wall (17).

14. An arrangement as claimed in any one of the Claims 1 to 13, characterised in that after the sensing element (44b) has moved around the corner (53) upon detection of a digital magnetic-tape cassette (13) the opener pin (26), as the cassette is inserted deeper, moves along the guide profile until it engages behind a stop edge (57), the opener pin (26) moving the sliding cover (16) from the closed position into the open position.

15. An arrangement as claimed in any one of the Claims 1 to 14, characterised in that the opener pin (26) is latched behind the stop edge (57) with the aid of a cassette-retaining member (61) which is arranged on the cassette holder and which engages a coupling groove (21) in the digital magnetic-tape cassette (13).

16. An arrangement as claimed in Claim 15, characterised in that the cassette-retaining member (61) engages the coupling groove (21) with a limb (61a).

17. An arrangement as claimed in any one of the Claims 1 to 16, characterised in that
- upon insertion of a magnetic-tape cassette (3, 13) into the cassette holder (33) up to an end position (56) said holder together with the cassette (3, 13) can be moved further into a stop position (69),
- the cassette holder (33) is latched against movement until the instant at which the cassette (3, 13) in it has reached its end position (56),
- latching (65) of the cassette holder (33) is not discontinued until the cassette-retaining member (61) has already engaged the cassette (3, 13).

18. An arrangement as claimed in Claim 8, characterised in that when latching of the cassette holder (33) ceases the cassette-retaining member (61) has loosely engaged the cassette (3, 13) with a limb portion (61c, 61d), and when the cassette (3, 13) has reached its stop position (69) in the cassette holder (33) the limb (61a) for the digital cassette (13) is in full positive engagement with the coupling groove (21) or the limb (61b) for the analog cassette (3) is in full positive engagement with a reel-spindle hole (6).

19. An arrangement as claimed in Claim 8, characterised in that latching of the cassette holder (33) is effected by means of a latching lever (65) which is engageable behind a stop (67) of the chassis (68) with a latching hook (65c), which is disengageable therefrom by the cassette (3, 13), and which has a free end (65b) which is spring-loaded in the clockwise direction.

## Revendications

1. Dispositif composé d'un magnétophone à cassette avec un entraînement et un mécanisme de chargement (32) pourvu d'un compartiment pour cassettes à bande magnétique (3, 13) dans lequel les cassettes peuvent être introduites et des cassettes à bande magnétique (3, 13) qui présentent des évidements (6) dans des parois principales parallèles (7a, 7b; 18, 19) et, dans une paroi latérale (8, 17) reliant les parois principales (7a, 7b, 18, 19), des ouvertures de commande (9, 10) pour l'introduction d'une tête de lecture et de galets presseurs, un mécanisme de reconnaissance qui balaie la paroi latérale de la cassette (8, 17) avec les ouvertures de commande et présente un organe palpeur qui, en fonction du type de cassette (3, 13) lors de l'introduction, soit longe cette paroi (8, 17) de la cassette, soit accoste un contour de guidage pour parvenir ainsi devant un coulisseau de ce type de cassette et le pousser jusqu'à ce que les ouvertures de commande soient libérées étant prévu pour la manipulation de types de cassettes à bande magnétique présentant des normes de lecture de bande et des conceptions de boîtiers différents, le mécanisme de reconnaissance (41), au début de l'introduction d'une cassette à bande magnétique en direction longitudinale, dans laquelle les bobines de bande sont l'une derrière l'autre, est activé par le fait que la courte paroi latérale située antérieurement lors de l'introduction entraîne le palpeur sans qu'à ce moment, le coulisseau ne soit déjà chargé en direction de la position dans laquelle il libère les ouvertures de commande et que le palpeur se déplace lorsque l'opération d'introduction se poursuit vers la longue paroi latérale de la cassette (8, 17) avec les ouvertures de commande (9, 10) et la longe, le palpeur reconnaissant le type de cassette précisément introduit et, en fonction de sa conception, la longe sans entrave jusqu'à la fin de la course d'introduction dans un type de cassette ou accoste le contour de guidage d'un autre type de cassette pour ouvrir le coulisseau (16) vers la fin de la course d'introduction.

2. Dispositif selon la revendication 1, caractérisé en ce que
- le mécanisme de reconnaissance (41) se compose d'un dispositif à levier à plusieurs articulations qui, sous l'action du ressort, coopère avec les parois latérales de la cassette (8, 12, 17, 20) de part et d'autre d'un coin de la cassette (53), qui, dans le sens d'introduction, limite l'extrémité antérieure de la paroi latérale d'ouverture (8, 17) de la cassette (3, 13),
- un palpeur (44b) est entraîné contre l'action du ressort le long d'un levier palpeur (44) du dispositif à levier à plusieurs articulations lors de l'introduction d'une cassette (3, 13) par la paroi latérale de la cassette (12, 20) située antérieurement dans le sens d'introduction et
- un levier d'ouverture (43) du dispositif à levier à plusieurs articulations explore simultanément la paroi latérale d'ouverture (8, 17) pour y détecter un contour de guidage (22) de la cassette à bande magnétique (13) avec le coulisseau (16).

3. Dispositif selon l'une des revendications 1 ou 2, caractérisé en ce que levier d'ouverture (3) présente un contour (43d) qui coopère avec une butée (49) du compartiment à cassette (33) de telle sorte que le levier d'ouverture (43), en cas de détection d'un contour de guidage (22) par l'organe palpeur (44b), puisse être entraîné au-delà de la butée (49) dans le sens d'introduction tandis qu'il reste bloqué contre la butée (49) en cas d'absence de contour de guidage (22).

4. Dispositif selon l'une des revendications 1 à 3, caractérisé en ce qu'en cas d'entraînement du levier d'ouverture (43) dans le sens d'introduction (11), le début de l'ouverture du coulisseau est décalé à des positions réciproques de la cassette (13) et de l'ouverture d'introduction dans la paroi frontale de l'appareil telles que le coulisseau, au début de l'ouverture, se trouve déjà derrière le bord antérieur de la paroi frontale (cassette numérique insérée correctement).

5. Dispositif selon l'une des revendications 1 à 3, caractérisé en ce que le levier d'ouverture (43), lorsqu'il reste bloqué contre la butée (49) en cas d'introduction de la cassette (3), est forcé de longer la paroi latérale d'ouverture (8), l'organe palpeur (44b) étant forcé de contourner le coin de la cassette (53) même en cas de force de ressort minime (cassette analogique ou cassette numérique introduite incorrectement).

6. Dispositif selon l'une des revendications 1 à 5, caractérisé en ce que le levier palpeur (44) est appliqué à l'aide d'une articulation (44a) de manière articulée contre le levier d'ouverture (43) qui est, à son tour, appliqué à l'aide d'une articulation (43a) de manière articulée contre un levier d'appui (42) qui est disposé pour sa part de manière articulée contre le compartiment à cassette (33), le levier palpeur (44) étant relié à l'aide d'un ressort d'ouverture (45) avec le compartiment à cassette (33) de telle sorte que le ressort d'ouverture (45) qui s'étend lors de l'introduction de la cassette à bande magnétique (3, 13) exerce sur le levier palpeur (44) et, par l'intermédiaire de celui-ci, sur le levier d'ouverture (43) un couple orienté dans le sens des aiguilles d'une montre tel que l'organe palpeur (44b) soit chargé en direction du coin de la cassette (53) et du levier d'ouverture (43) avec une extrémité libre du levier en direction de la paroi latérale d'ouverture (8, 17) de la cassette (3, 13).

7. Dispositif selon l'une des revendications 1 à 6, caractérisé en ce qu'une broche d'ouverture (26) qui s'engage dans le contour de guidage (22) lorsque celui-ci est présent, est prévue sur le levier d'ouverture (43), le contour (43b) du levier d'ouverture (43) pouvant libérer la butée (49).

8. Dispositif selon l'une des revendications 1 à 7, caractérisé en ce qu'en cas de levier d'ouverture libéré (43) entraîné par la cassette (13) par l'intermédiaire de l'organe palpeur (44b) et du levier palpeur (44) ainsi que de l'articulation (44a) et de l'articulation (43a), le levier d'appui (42) pivote dans le sens des aiguilles d'une montre autour de son axe (42a), la broche d'ouverture (26) étant entraînée conformément à la cassette dans le sens d'introduction (11) de telle sorte qu'elle ne puisse faire glisser le coulisseau (16) par rapport à la cassette (13).

9. Dispositif selon l'une des revendications 1 à 8, caractérisé en ce qu'une ligne de liaison (44c) va de l'axe (44d) de l'organe palpeur (44b) à l'axe (44a) entre le levier palpeur (44) et le levier d'ouverture (43) et en ce que le point d'application (44a) du ressort d'ouverture (45) qui s'appuie dans le compartiment à cassette (33) est prévu sur une perpendiculaire à cette ligne de liaison (44c) qui est tracée dans l'axe (44d).

10. Dispositif selon l'une des revendications 1 à 9, caractérisé en ce qu'en cas d'introduction de la cassette (13), le levier palpeur (44) tend le ressort d'ouverture (45) qui, quant à lui, exerce par l'intermédiaire de la broche (44e) sur la cassette (13) une force opposée à la force d'introduction et par ailleurs une force en sens opposé au coin de la cassette (53) de telle sorte que l'organe palpeur (44b) soit initialement dans l'impossibilité de contourner le coin de la cassette (53).

11. Dispositif selon l'une des revendications 1 à 10, caractérisé en ce qu'en cas d'introduction ultérieure de la cassette et, dès lors, de disparition de la force opposée au coin de la cassette (53), l'organe palpeur (44b) accoste le coin de la cassette (53) et le contourne dès que l'action de la force s'inverse d'une orientation opposée au coin de la cassette (53) à une orientation de la force vers le coin de la cassette (53), la broche d'ouverture (26) commençant ainsi à faire glisser le coulisseau (16) dans le sens contraire du sens d'introduction et dès lors à ouvrir les ouvertures de commande (9, 10).

12. Dispositif selon l'une des revendications 1 à 11, caractérisé en ce que le ressort d'ouverture (45) est un ressort enroulé avec un premier bras de ressort (45a) qui est appliqué contre la broche (44e) du levier palpeur (44) et un deuxième bras de ressort (45b) qui présente sur son extrémité opposée à la boucle de ressort (45c) une autre boucle (45d) dont part un troisième bras de ressort (45e) dont l'extrémité libre est appliquée contre une butée (47).

13. Dispositif selon la revendication 12, caractérisé en ce que le centre (45f) de la boucle de ressort (45c) se trouve toujours dans une zone qui peut être définie par le prolongement (8d) de la paroi latérale d'ouverture (17) dans le sens d'introduction et une parallèle (42b) à cette ligne qui coupe l'axe (42a), le bras de ressort (45a, 45b) s'étendant à cette occasion dans la direction du prolongement de la paroi latérale d'ouverture (17).

14. Dispositif selon l'une des revendications 1 à 13, caractérisé en ce que la broche d'ouverture (26), lorsque l'organe palpeur (44b) a franchi le coin (53) lors du balayage d'une cassette à bande magnétique numérique (13), longe lors de l'introduction ultérieure de la cassette dans le contour de guidage (22) jusqu'à ce qu'elle s'engage derrière un bord d'arrêt (57), la broche d'ouverture (26) ayant amené le coulisseau (16) de sa position de fermeture dans sa position d'ouverture.

15. Dispositif selon l'une des revendications 1 à 14, caractérisé en ce que la broche d'ouverture (26) est bloquée derrière le bord d'arrêt (57) à l'aide d'un support de cassette (61) disposé sur le compartiment à cassette, lequel support s'engage dans une rainure d'entraînement (21) de la cassette à bande magnétique numérique (13).

16. Dispositif selon la revendication 15, caractérisé en ce que le support de cassette (61) s'engage dans la rainure d'entraînement (21) à l'aide d'un ergot (61a).

17. Dispositif selon l'une des revendications 1 à 16, caractérisé en ce que
- le compartiment à cassette (33), lorsqu'une cassette à bande magnétique (3, 13) y a été insérée jusque dans sa position finale (56), peut continuer à être déplacé avec la cassette (3, 13) d'une longueur de course jusque dans sa position de butée (69),
- le compartiment à cassette (33) est bloqué contre tout glissement à l'aide d'un arrêt jusqu'au moment où la cassette (3, 13) y a atteint sa position de fin de course (56),
- l'arrêt (65) du compartiment à cassette (33) n'est supprimé que lorsque le support de cassette (61) a déjà saisi la cassette (3, 13).

18. Dispositif selon la revendication 8, caractérisé en ce que le support de cassette (61) a saisi facilement à l'aide d'une partie en ergot (61c, 61d) la cassette en cas de suppression de l'arrêt du compartiment à cassette (33) et en ce que l'ergot (61a) de la cassette numérique (13) a été inséré dans une fermeture géométrique complète dans la rainure d'entraînement (21) de même que l'ergot (61b) de la cassette analogique (3) dans un orifice de bobinage (6) lorsque la cassette (3, 13) a atteint sa position de butée (69) dans le compartiment à cassette (33).

19. Dispositif selon la revendication 8, caractérisé en ce que l'arrêt du compartiment à cassette (33) est effectué à l'aide d'un levier d'arrêt (65) qui peut être accroché à l'aide d'un crochet d'arrêt (65c) derrière une butée (67) du châssis (68) qui peut être détaché de la cassette (3, 13) et dont l'extrémité libre (65b) est chargée par ressort dans le sens des aiguilles d'une montre.
